# EUROPEAN PATENT APPLICATION

(11) **EP 3 995 232 A1**
(43) Date of publication of application: **11.05.2022**
(21) Application number: 20834274.1
(22) Date of filing: 30.06.2020
(51) Int. Cl.: B22F 3/105, B22F 3/16, B33Y 30/00

(54) **SHAPING DEVICE**

(30) Priority: 01.07.2019 WO PCT/JP2019/026056
(71) Applicant: NIKON CORPORATION, Minato-ku Tokyo 108-6290 (JP)
(72) Inventor: ISHIKAWA,Motofusa, Tokyo 108-6290 (JP)
(74) Representative: Arnold & Siedsma
(86) International application number: PCT/JP2020/025702
(87) International publication number: WO 2021/002365

(57) **Abstract**

This shaping device (100) is provided with: a material supply device (18) that supplies a shaping material (BM) onto a support surface (SS); a beam irradiation unit (16) that irradiates the shaping material on the support surface (SS) with an energy beam (EB); a support member (26) that supports a support surface member (MP) which has the support surface; a reference mark that is irradiated with the energy beam; and a moving device that moves the reference mark with respect to the beam irradiation unit.

## Description

### [Technical Field]

The present invention relates to a shaping device, and more particularly, to a shaping device configured to irradiate a layered shaping material with an energy beam and form a shaped object.

### [Background Art]

A technology of directly generating a 3-dimensional (3D) shape from computer-aided design (CAD) data is referred to as rapid prototyping (or may be referred to as 3D printing, additive manufacturing, or direct digital production), and mainly contributes to manufacturing of a trial product for the purpose of shape confirmation at an extremely short lead time. Shaping devices configured to form a 3-dimensional shaped object through rapid prototyping by a 3D printer or the like can be roughly classified according to a material that is handled into devices configured to handle a resin and devices configured to handle a metal. 3-dimensional shaped objects formed of a metal fabricated through rapid prototyping are used mostly as actual parts, unlike the case of a resin. That is, the objects function as parts of an actual mechanical structure (whether it is a mass-produced product or a trial product), not as prototype parts for shape confirmation. In a conventional 3D printer using a metal, powder bed fusion (PBF) is well known.

In PBF, a metal powder is thinly laminated on a bed on which a workpiece is mounted and scanned with a high energy laser beam using a galvanometer mirror or the like, and the portion hit by the laser beam is melted and solidified. When drawing for one layer is completed, the bed drops by a thickness for one layer, the metal powder is spread over again, and the same procedure is repeated. In this way, the shaping is repeated layer by layer to obtain a desired 3-dimensional shape.

A 3D printer for a metal configured to perform PBF using a charged particle beam, for example, an electron beam (hereinafter, also referred to as an electron beam 3D printer using a metal) nstead of the laser beam is also known (for example, see Patent Literature 1). The electron beam 3D printer for a metal can fabricate high density and high strength metal parts at a high speed in comparison with the 3D printer for a metal using the laser beam.

However, in the electron beam 3D printer for a metal in the related art including the device disclosed in Patent Literature 1, in consideration of practicability, there is room for improvement related to shaping precision, a shaping speed (productivity), and the like.

### [Citation List]

### [Patent Literature]

[Patent Literature 1]
PCT International Publication No. 2014/187606

### [Summary of Invention]

A first aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; a reference mark to which the energy beam is radiated; and a movement device configured to move the reference mark with repsect to the beam irradiation device.

In the specification, "on the support surface" includes not only the case in which something is in contact with the support surface, but also the case in which it is above and separated from the support surface. For example, when the layers of the plurality of shaping materials are formed on the support surface, the layers include not only a first layer but also second and subsequent layers.

A second aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; a beam monitor configured to detect the energy beam; and a movement device configured to move the beam monitor with repsect to the beam irradiation device.

A third aspect of the present invention provides a shaping device configured to shape a shaped object on a first support surface and a second support surface, the shaping device comprising: a beam irradiation device configured to irradiate a shaping material on the first support surface and a shaping material on the second support surface with an energy beam; a first support member configured to support a first support surface member which includes the first support surface; a second support member configured to support a second support surface member which includes the second support surface; and a movement device configured to move a rotation portion, which includes the first and second support members, around a rotation axis.

A fourth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; and a support member configured to support a support surface member which includes the support surface; wherein the support surface is tiltable with respect to irradiation direction of the energy beam.

A fifth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; a movement device configured to move the support member with respect to the beam irradiation device; and a controller configured to control the movement device based on a movement speed of the support member.

A sixth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; a movement device configured to move the support member with respect to the beam irradiation device; and a controller configured to control the movement device based on an amount of the shaping material supplied onto the support surface.

A seventh aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; and a movement device configured to move the support member with respect to the beam irradiation device; wherein the movement device moves the support member at a constant speed when the shaping material on the support surface passes an irradiation position of the energy beam from the beam irradiation device.

A eighth aspect of the present invention provides a shaping device configured to shape a shaped object on a support surface, the shaping device comprising: a material supply device configured to supply a shaping material onto the support surface; a plurality of beam irradiation units configured to irradiate the shaping material on the support surface with an energy beam from each of the plurality of beam irradiation device; a support member configured to support a support surface member which includes the support surface; and a blocking plate which is disposed between the plurality of beam irradiation units and the support member and onto which a plurality of openings, through which the energy beam from the plurality of beam irradiation units pass, are formed.

A ninth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; and a movement device configured to move the support member with respect to the beam irradiation device, wherein, in a duration in which the support member is moved by the movement device, the beam irradiation device deflects the energy beam.

A tenth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; and a support member configured to support a support surface member which includes the support surface; wherein the material supply device includes a hopper part configured to supply the shaping material from a supply port and a material supply part configured to supply the shaping material to the hopper part.

An eleventh aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; a movement device configured to move the support member with respect to the beam irradiation device; and a controller configured to control the material supply device based on a positional relationship between a material supply position by the material supply device and the support surface.

A twelfth aspect of the present invention provides a shaping device configured to shape a shaped object on a support surface, the shaping device comprising: a plurality of material supply device configured to supply a shaping material onto the support surface; a beam irradiation device configured to irradiate the shaping material on the support surface with an energy beam; a support member configured to support a support surface member which includes the support surface; and a movement device configured to move the support member with respect to the beam irradiation device; wherein the plurality of material supply device are provided at different positions on a route where the support member is moved.

A thirteenth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member which includes the support surface; and a movement device configured to move the support member with respect to the beam irradiation device; wherein the material supply device is movable in a direction parallel to a plane in which the support member is moved.

A fourteenth aspect of the present invention provides a shaping device configured to shape a shaped object on a support surface, the shaping device comprising: a material supply device configured to supply a shaping material onto the support surface; a plurality of heating device configured to heat the shaping material on the support surface, a beam irradiation device configured to irradiate the shaping material on the support surface with an energy beam; a support member configured to support a support surface member which includes the support surface; and a movement device configured to move the support member with respect to the beam irradiation device; wherein the plurality of heating device are provided at different positions at above a route where the support member is moved.

A fifteenth aspect of the present invention provides a shaping device configured to shape a shaped object on a support surface, the shaping device comprising: a material supply device configured to supply a shaping material onto the support surface; a beam irradiation device configured to irradiate the shaping material on the support surface with an energy beam; a support member configured to support a support surface member, which includes the support surface, on one surface of the support member; a first moving device that has a movable member and that is configured to move the support member with respect to the beam irradiation device by moving the movable member; and a second moving device configured to move the support member, wherein movement of the support member by the second moving device includes a component parallel to the support surface.

### [Brief Description of Drawings]

Fig. 1 is a view schematically showing a configuration of a shaping device according to a first embodiment.
Fig. 2 is a perspective view showing a shaping device main body section in Fig. 1, a part of which is omitted.
Fig. 3 is a view for describing configurations of parts disposed on an upper surface of a frame-shaped section and disposition of a beam irradiation unit in the shaping device according to the first embodiment, and a view (1) for describing a moving operation of a table device 12 along a circulation route.
Fig. 4 is a view (2) for describing the moving operation of the table device 12 along the circulation route in the shaping device according to the first embodiment.
Fig. 5 is a view (3) for describing the moving operation of the table device 12 along the circulation route in the shaping device according to the first embodiment.
Fig. 6 is a view (4) for describing the moving operation of the table device 12 along the circulation route in the shaping device according to the first embodiment.
Fig. 7 is a view (5) for describing the moving operation of the table device 12 along the circulation route in the shaping device according to the first embodiment.
Fig. 8 is a view (6) for describing the moving operation of the table device 12 along the circulation route in the shaping device according to the first embodiment.
Fig. 9 is a view (7) for describing the moving operation of the table device 12 along the circulation route in the shaping device according to the first embodiment.
Fig. 10 is a view (8) for describing the moving operation of the table device 12 along the circulation route in the shaping device according to the first embodiment.
Fig. 11 is a view for describing a reason for employing a multi-column electron beam optical system.
Fig. 12 is a view (1) for describing formation of a shape of a layer of a shaping material performed by the shaping device main body section.
Fig. 13 is a view (2) for describing the formation of the shape of the layer of the shaping material performed by the shaping device main body section.
Fig. 14 is a view (3) for describing the formation of the shape of the layer of the shaping material performed by the shaping device main body section.
Fig. 15 is a perspective view for describing leveling of a surface of the shaping material supplied on a table (a shaping plate).
Fig. 16 is a block diagram showing an input/output relation of a controller that constitutes a control system of the shaping device according to the first embodiment as a main component.
Fig. 17 is a perspective view showing an aspect of irradiation of a shaping material on the table with electron beams from three beam irradiation units.
Fig. 18 is a view for describing an example in which shaping work with respect to layers of a shaping material is shared by three beam irradiation units.
Fig. 19 is a view showing an example of a beam current value in a case a beam current value in a boundary region AB is graded in the example shown in Fig. 18.
Fig. 20 is a perspective view showing a configuration of a shaping device main body section that constitutes a shaping device according to a second embodiment.
Fig. 21 is a plan view showing the shaping device main body section in Fig. 20, a part of which is omitted.
Fig. 22 is a block diagram showing an input/output relation of a controller that constitutes a control system of the shaping device according to the second embodiment as a main component.
Figs. 23(A) to 23(C) are views for describing variants of the first and second embodiments, and views showing a system of a configuration that supplies a shaping material onto a support surface from below.
Fig. 24 is a view for describing a variant of the second embodiment, and a view showing a system including pluralities of supply sections and shaping sections.
Fig. 25 is a view schematically showing a configuration of a shaping device according to a third embodiment.

### [Description of Embodiments]

### <<First embodiment>>

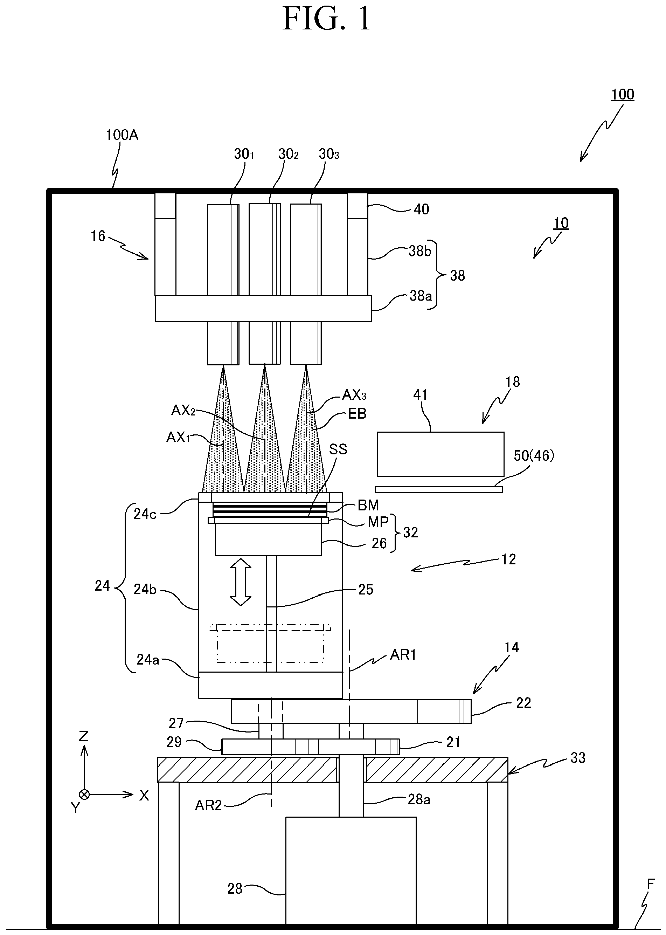

Hereinafter, a first embodiment of the present invention will be described with reference to Figs. 1 to 19. Fig. 1 schematically shows a configuration of a shaping device 100 according to the first embodiment. As described below, since the shaping device 100 includes a plurality of electron beam irradiation units having optical systems, as described in the following description, a Z axis parallel to an optical axis (AX₁) or the like of the optical system of the electron beam irradiation unit is defined, a leftward/rightward direction in Fig. 1 in a plane perpendicular to the Z axis is referred to as an X-axis direction, and a direction perpendicular to the Z axis and the X axis is referred to as a Y-axis direction. Fig. 1 shows a configuration of the shaping device 100 as a partial cross section when seen in a -Y direction.

The shaping device 100 is a 3D printer for a metal of a powder bed fusion (PBF) type. In the PBF, a metal powder serving as a shaping material is spread in layers on a table (also referred to as a shaping table) or a plate mounted on the shaping table to form a powder bed, only a necessary portion of the powder bed is selectively irradiated with a high energy beam, and the portion hit by the beam is melted and solidified. When irradiation (drawing) of beams for one layer is finished, the shaping table drops by a thickness for one layer, the metal powder is spread over again, and the same procedure is repeated. In this way, the shaping is repeated layer by layer, and a desired 3-dimensional shape is obtained. In the shaping device 100 according to the embodiment, as will be described below, an electron beam that is a type of a charged particle beam is used as a high energy beam. Further, a light beam, for example, a laser beam, may be used as a high energy beam selectively radiated to the powder bed.

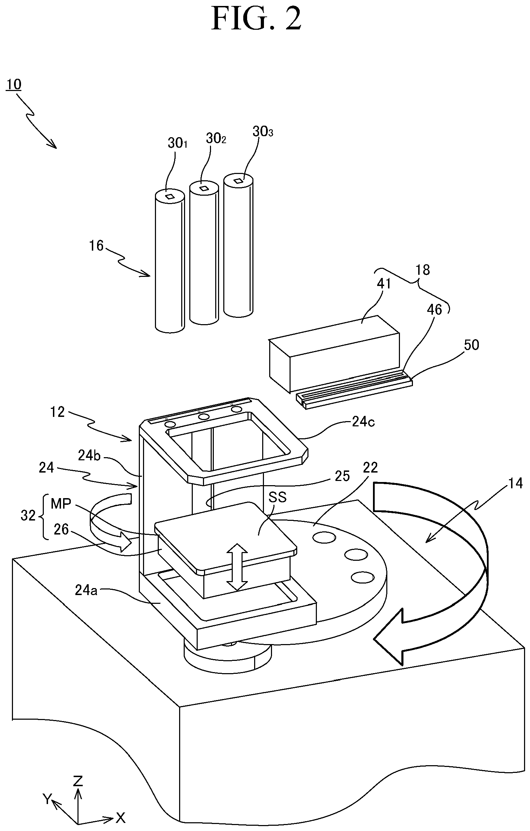

The shaping device 100 includes a housing 100A installed on a floor surface F in a factory, and a shaping device main body section 10 accommodated in the housing 100A. In Fig. 2, the shaping device main body section 10 is partially omitted and shown in a perspective view.

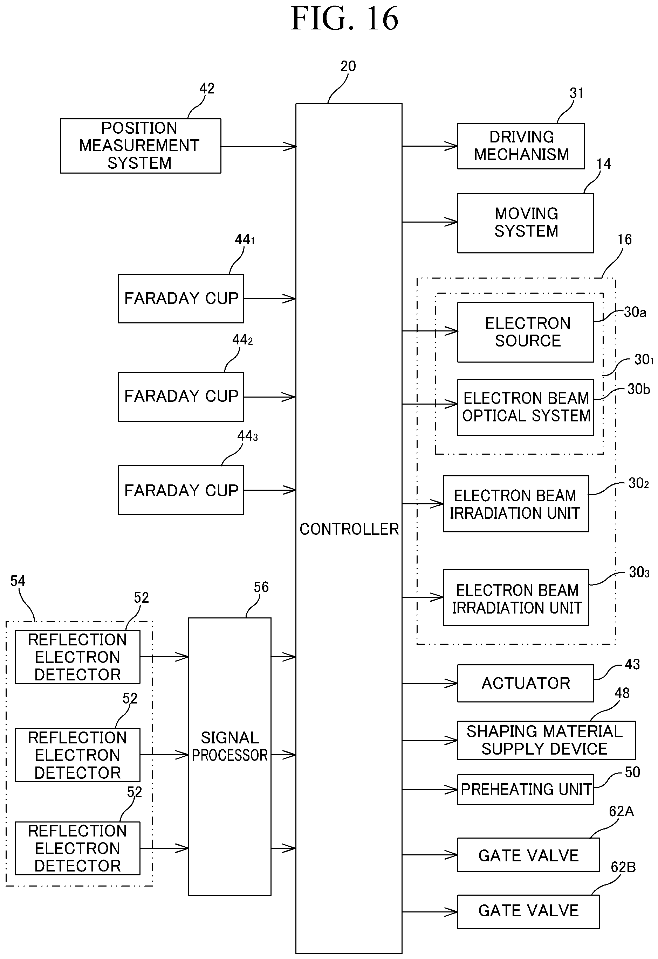

As shown in Figs. 1 and 2, the shaping device main body section 10 includes a table device 12, a moving system 14, a beam irradiation unit 16, a powder applying system 18, a preheating unit 50, a controller 20 (not shown in Fig. 1, see Fig. 16) configured to control them, and the like.

The table device 12 includes a table base 24 mounted on a rotating table 22 that constitutes a part of the moving system 14, and a driving mechanism 31 (not shown in Figs. 1 and 2, see Fig. 16) configured to drive a table 26 that is movable along a guide groove 25 in the upward/downward direction (the Z axis direction) provided in the table base 24.

The table base 24 has a base section 24a formed in a predetermined shape, for example, a rectangular plate shape having a concave portion formed in an upper surface provided on the lowermost end, a back plate section 24b standing upward (perpendicular to an XY plane) from one end portion of the base section 24a (an end portion on a back side (a +Y side) in Fig. 1), and a frame-shaped section 24c provided on an upper end of the back plate section 24b to face the base section 24a. In the embodiment, the table device 12 is normally in the same direction, i.e., maintains an orientation in which the back plate section 24b shown in Figs. 1 and 2 is directed in a direction parallel to an XZ plane. More on this will be described below.

The above-mentioned guide groove 25 is formed in a central portion in the X-axis direction of a -Y side surface of the back plate section 24b. Further, the guide groove may be referred to as a guide portion. The guide portion is not limited to a groove, and may be a convex portion or a rod-shaped member.

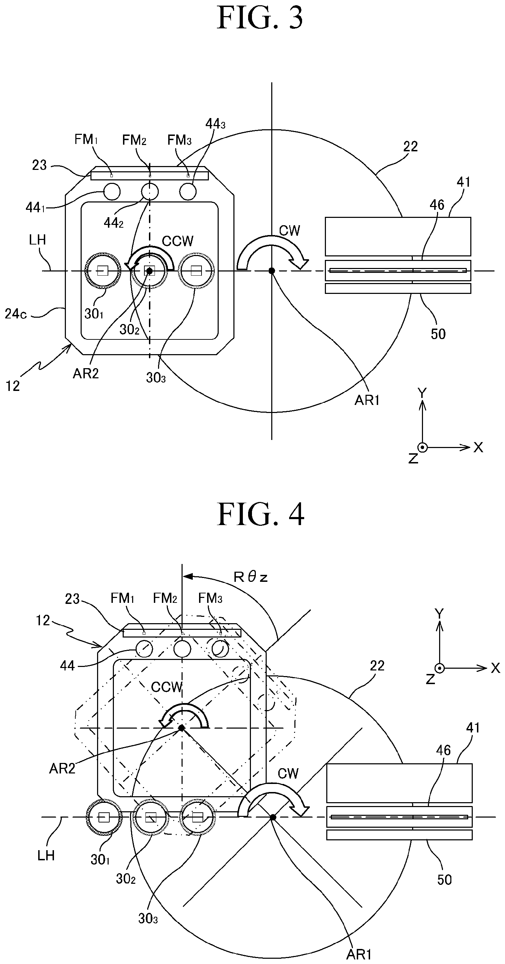

As shown in Fig. 2, the frame-shaped section 24c is constituted by a plate member having a rectangular frame shape (a rectangular shape having a center opening) when seen in a plan view parallel to an XY plane, having one end (a +Y side end) fixed to an upper end surface of the back plate section 24b. The frame-shaped section 24c has a role of restricting a spread of a power-form shaping material BM (see Fig. 1) in the XY plane (the horizontal plane) supplied onto a shaping plate MP mounted on the table 26. For example, as shown in Fig. 3, a reference mark plate 23 extending in the X-axis direction and a plurality of, for example, three beam monitors 44₁, 44₂ and 44₃ are disposed in a +Y side portion of an upper surface of the frame-shaped section 24c. Further, more on the reference mark plate and the beam monitor will be described below.

While the shaping plate MP constituted by a plate-shaped member is mounted on the table 26, the shaping plate MP is detachably attached to the table 26. That is, the shaping plate MP is not a component of the shaping device 100. Hereinafter, both of the table 26 and the shaping plate MP mounted on the table 26 are collectively referred to as a table section 32 for convenience of explanation.

The shaping plate MP is constituted of a square plate-shaped member, four corners of which are chamfered. The shaping plate MP is detachably fixed onto the table 26 via, for example, an electrostatic chuck (or a mechanical chuck), which is not shown. In the embodiment, as described below, a series of processes are performed on the shaping plate MP to construct a shaped object. That is, an upper surface of the shaping plate MP is a support surface SS. The shaping plate MP is supported by the table 26 in a state in which the support surface SS is parallel to the XY plane (the horizontal plane).

The driving mechanism 31 may be configured to include, for example, an L-shaped support member configured to support the table 26, and a linear motor or other uniaxial actuators configured to drive the support member along the guide groove 25 (the guide portion) in the upward/downward direction.

The moving system 14 moves the table device 12 along a predetermined circulation route (in the embodiment, a circular route about a first axis (an axis AR1) parallel to the Z axis shown in Fig. 1) in the horizontal plane (the XY plane), and drives the table device 12 to rotate in conjunction with a variation in position in the horizontal plane of the table device 12 such that an orientation of the table device 12 in the horizontal plane is maintained in a predetermined orientation (an orientation in which the back plate section 24b is parallel to the XZ plane). More specifically, as shown in Fig. 1, the moving system 14 has the rotating table 22 rotatable about the axis AR1 in the XY plane, a motor 28 having a driving shaft 28a with one end (an upper end) integrally connected to a central portion of the rotating table 22, a driving gear 21 integrally attached to the driving shaft 28a to be concentric with the driving shaft 28a, and a driven gear 29 meshed with the driving gear 21. As shown in Fig. 1, the driven gear 29 is fixed to one end (a lower end) of a shaft member 27 having a predetermined length in the Z axis direction. The shaft member 27 has the other end (upper end) portion disposed in a through-hole formed in the rotating table 22 in the upward/downward direction, and the other end surface fixed (connected) to a lower surface of the base section 24a of the table base 24.

As shown in Fig. 1, the motor 28 is disposed below a stand 33 installed on a bottom surface of the housing 100A. The driving shaft 28a is disposed to pass through an upper plate of the stand 33 in the upward/downward direction, and supported by the upper plate of the stand 33 rotatable about the axis AR1 via an annular bearing section (not shown). The shaft member 27 is attached to the rotating table 22 rotatable about a second axis, i.e., a central axis AR2 of the shaft member 27, via a bearing section (not shown). In the embodiment, a rotation center AR2 of the shaft member 27 is a reference point of the table device 12, which will be described below.

A predetermined clearance (void, gap) is set between the upper plate of the stand 33 and each of the driving gear 21 and the driven gear 29. The driving gear 21 and the driven gear 29 have a disk shape with the same diameter, and have gear portions having the same shape and the same size that are meshed with outer circumferential portions thereof. When the driving gear 21 is driven by the motor 28 to rotate clockwise (in a first rotation direction) about the axis AR1 via the driving shaft 28a integrally with the rotating table 22, for example, when seen in a plan view (in the +Z direction), the table device 12 including the table 26 moves in the first rotation direction. According to another expression, the central axis (second axis) AR2 of the shaft member 27 moves around the first axis. Here, the driven gear 29 (the table device 12) is driven to rotate counterclockwise (in a second rotation direction) about the axis (central axis) AR2 of the shaft member 27 in conjunction with the rotation of the driving gear 21 when seen in a plan view.

In this case, a speed ratio (a rotation speed ratio) between the driving gear 21 and the driven gear 29 is set to 1:1 because the gear portions of both gears have the same shape and the same size. Accordingly, a rotation angular speed of the table device 12 in the first rotation direction is equal to a rotation angular speed of the table device 12 in the second rotation direction. For this reason, in the embodiment, while the table device 12 moves on a circumference about the axis AR1 according to rotation of the rotating table 22, the table device 12 rotates in an direction opposite to the rotating table 22 about the axis AR2 of the shaft member in conjunction with rotation of the rotating table 22, and as a result, the table device 12 is normally directed in the same direction. For this reason, in the embodiment, as described above, the table device 12 is oriented in a direction in which the back plate section 24b is parallel to the XZ plane. Accordingly, a posture of the support surface SS is constant.

Further, while the driving gear 21 and the driven gear 29 are exposed at the upper portion of the stand 33 in the example of the embodiment, the gear mechanism including the driving gear 21 and the driven gear 29 may be disposed below the upper plate of the stand 33, and the rotating table 22 may be exposed at the upper portion of the stand 33 together with a part of the driving shaft 28a and a part of the shaft member 27. Alternatively, the rotating table 22 may be disposed below the upper plate of the stand 33 together with the gear mechanism. In this case, only the upper end portion of the shaft member 27 is exposed at the upper portion of the stand 33.

In the embodiment, a position measurement system 42 (see Fig. 16) constituted by a rotary encoder configured to detect a rotation angle from a reference position about the axis AR1 of the rotating table 22 is provided. Measurement information of the position measurement system 42 is supplied to the controller 20. The controller 20 can obtain a position of the axis AR2 that is a reference point of the table device 12, i.e., a rotation center of the table device 12 (a rotation center of the shaft member 27), in the horizontal plane (for example, a coordinate position in an XY coordinate system using the axis AR1 as an origin) on the basis of information of a rotation angle from the position measurement system 42. Accordingly, the position measurement system 42 functions as a position measurement system configured to measure positional information of the reference point (the axis AR2) of the table device 12 in the horizontal plane.

As shown in Figs. 1 and 2, the beam irradiation unit 16 has three electron beam irradiation units (hereinafter, simply referred to as beam irradiation units) 30₁ to 30₃. The beam irradiation units 30₁ to 30₃ individually have emitting ports and emit electron beams EB from the emitting ports as energy beams. Each of the beam irradiation units 30₁ to 30₃, as shown representatively in Fig. 16 with the beam irradiation unit 30₁, has a source 30a for electrons, and an electron beam optical system 30b configured to deflect the electron beam EB within a predetermined angle range while irradiating a target with the electrons emitted from the source 30a as the electron beam EB. While not shown in Fig. 1, Fig. 2, and the like, the source 30a is disposed on an upper end portion in a lens barrel (column) included in the beam irradiation unit 30ᵢ (i = 1 to 3). As the source 30a, in the embodiment, as an example, a source obtained by combining a laser source, for example, a laser diode, a photoelectric conversion element having a Pt photoelectric conversion film, and an electron multiplier is used. Further, as the electron source, an electron gun, for example, a thermionic electron gun using lanthanum hexaboride (LaB6), a thermionic electron gun using iridium cerium (IrCe), or the like may be used. In addition, for example, a combination of a laser diode and a photoelectric conversion element having an alkali photoelectric conversion film or the like may be used.

The electron beam optical system 30b is constituted by, as an example, an electrostatic lens, an electromagnetic lens, a correction coil, a deflection lens, and the like disposed below the source 30a in the above-mentioned lens barrel. The electrostatic lens, the electromagnetic lens, the correction coil and the deflection lens are disposed on a beam route of the electron beam EB from the source 30a. The electrostatic lens and the electromagnetic lens are disposed in the vicinity of the source 30a in the lens barrel and the vicinity of the lower end portion (an outlet port (emitting port) for an electron beam). An extraction electrode configured to accelerate electrons emitted from the photoelectric conversion element is disposed above the electrostatic lens in the lens barrel. Further, the electromagnetic lens and the deflection lens may be disposed outside the lens barrel.

Here, the electrostatic lens functions as a condenser lens configured to focus electron beams, and the electromagnetic lens functions as a reduction production lens, which also functions as an objective lens. A correction coil configured to axially align the electrostatic lens and the electromagnetic lens is disposed between the electrostatic lens and the electromagnetic lens.

The deflection lens is disposed in the vicinity of the emitting port that is in the lens barrel below the electromagnetic lens, and irradiation position control of the electron beam EB, i.e., deflection control of the electron beam EB, is performed at a high speed.

A reduction magnification of the electron beam optical system 30b is set to, for example, 1/30 by design. The reduction magnification may be another magnification such as 1/18, 1/12, or the like.

As shown in Fig. 1, the beam irradiation units 30₁ to 30₃ are disposed at a position higher than the table device 12, and suspended and supported by a ceiling portion of the housing 100A via a support frame 38. The support frame 38 has a support plate 38a configured to support the three beam irradiation units 30₁ to 30₃, and a plurality, for example, a pair, of support members 38b configured to suspend and support the support plate 38a on the ceiling portion of the housing 100A. While a vibration proof member 40 is provided on an upper end portion of each of the pair of support members 38b and vibrations or the like of the motor 28 are transmitted to the three beam irradiation units 30₁ to 30₃ via the housing 100A, the vibrations are prevented or effectively minimized. An internal space of the housing 100A is vacuum-exhausted by a vacuum pump (not shown), and for example, a vacuum state of about 10⁻² [pa] is maintained. The housing 100A may be referred to as a vacuum chamber 100A.

Further, a configuration supporting the three beam irradiation units 30₁ to 30₃ is not limited to the above-mentioned configuration, and for example, the support plate 38a may be suspended and supported from the ceiling portion of the housing 100A via a plurality of, for example, three, suspension support mechanisms constituted by wires including vibration proof member on one ends (upper ends). In this case, in the vibrations such as floor vibrations transmitted to the housing 100A from the outside, since most vibration components in the Z axis direction parallel to an optical axis AXᵢ of the electron beam optical system 30b of the beam irradiation unit 30ᵢ are absorbed by the vibration proof member, high anti-vibration performance in the Z axis direction is obtained. In addition, a natural frequency of the suspension support mechanism is set to be lower in a direction perpendicular to the Z axis than in the Z axis direction. Since the three suspension support mechanisms may vibrate like pendulums in the direction perpendicular to the Z axis, lengths of the three suspension support mechanisms (lengths of wires) are set to be sufficiently long such that anti-vibration performance in the direction perpendicular to the Z axis (the ability to prevent vibrations such as floor vibrations or the like transmitted to the housing 100A from the outside from being transmitted to the support plate 38a (the beam irradiation units 30ᵢ)) is sufficiently increased. In this structure, the weight of the mechanical section can be reduced while high anti-vibration performance is obtained.

Further, a blocking plate (not shown) configured to protect the electron beam optical system 30b from smoke generated from a powdery shaping material (here, a metal powder) BM (i.e., a gas generated by radiating electron beams) via a predetermined clearance (void, gap), for example, several µm to tens of mm, may be disposed below the beam irradiation units 30₁ to 30₃. In this case, three openings are formed in the blocking plate to individually face outlet ports (emitting ports) of lens barrels of the three beam irradiation units 30₁ to 30₃. The electron beam optical system 30b can be kept clean by exchanging the blocking plate periodically. Further, the blocking plate may have a function of cooling an object disposed in the vicinity thereof (or minimizing a temperature change).

For example, as shown in Fig. 3, the three beam irradiation units 30₁ to 30₃ are disposed on a half-line (hereinafter referred to as a reference line for convenience) LH parallel to the X axis using the axis AR1 as an origin at a predetermined interval and separated from the axis AR1 in the X-axis direction when seen in a plan view (in the +Z direction). The optical axes AX₁ to AX₃ of the beam irradiation units 30₁ to 30₃ are parallel to the Z axis by design, and set to be perpendicular to the reference line LH. The emitting ports (referred to as first, second and third emitting ports) of the three beam irradiation units 30₁ to 30₃ are disposed at different positions in a surface (XY plane) crossing an irradiation direction in which the electron beam EB from the corresponding beam irradiation unit is radiated. That is, the first, second and third emitting ports are disposed in the direction crossing the direction in which a relative positional relation between the beam irradiation unit 16 and the support surface SS is changed.

In the shaping device 100 according to the embodiment, since the beam irradiation unit 16 has the three beam irradiation units 30₁ to 30₃, the optical system of the shaping device 100 is a multi-column electron beam optical system.

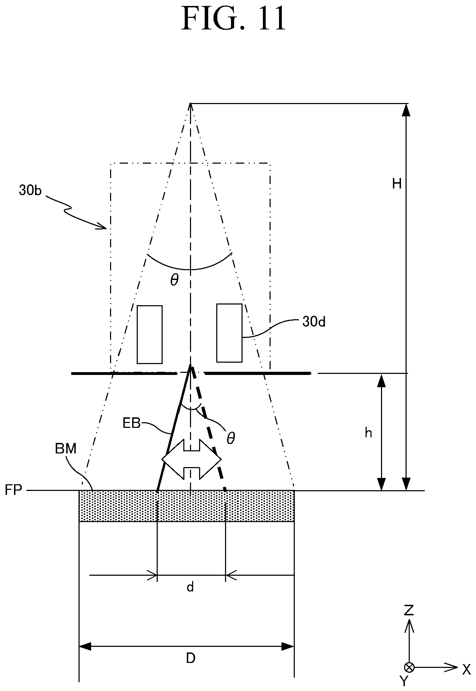

Here, the reason for employing the multi-column electron beam optical system will be described with reference to Fig. 11. Fig. 11 shows the electron beam optical system 30b having the beam irradiation unit 30₂ located at the center on behalf of the three beam irradiation units 30ᵢ. However, herein, only a deflection lens 30d is illustrated as an example.

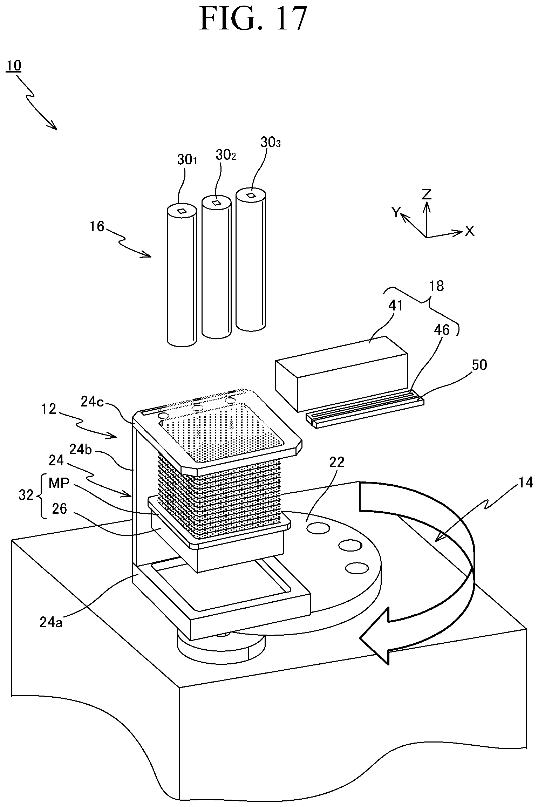

Here, in the shaping device 100 according to the embodiment, as shown in Fig. 11, for example, a case in which a region with a predetermined width of a length D (D is, for example, 300 mm) in the X-axis direction in which the shaping material BM is laid is set as an irradiation target region of the electron beam EB will be described. Here, maximum amplitude of the electron beam EB by the deflection lens 30d is represented by d. The maximum amplitude d is determined according to a distance (also referred to as a working distance) h between a surface (also referred to as a shaping surface) FP on which an irradiation region of the electron beam EB is formed and a lower end portion (more precisely, a deflection center by the deflection lens 30d) of the lens barrel and a maximum deflection angle θ of the electron beam EB by the deflection lens 30d. For example, when the working distance h is, for example, about 400 to 600 mm, the maximum amplitude d of the electron beam EB may be, for example, about 100 mm according to the setting of the maximum deflection angle θ. However, since the three beam irradiation units 30 are provided in the shaping device 100, it is possible to radiate an electron beam in parallel with a region on a long target in the X-axis direction using the three beam irradiation units 30₁ to 30₃ (see Fig. 17). Accordingly, even when the region with the length D = about 300 mm is set as an irradiation target region of the electron beam EB by the beam irradiation unit 16 even at the maximum amplitude d = 100 mm of the electron beam EB by one beam irradiation unit, the electron beam EB can be radiated to the entire irradiation target region.

Accordingly, it is possible to improve the following inconveniences a. and b. caused by a PBF type shaping device that employs an electron beam optical system of a single column in the related art.
a. In the PBF type shaping device in the related art, since a single column electron beam optical system is conventionally employed, for example, there is a need to set the amplitude of the electron beam EB to D or more when the region with the predetermined width of the length D (D is, for example, 300 mm) in the X-axis direction is an irradiation target region of the electron beam EB, and thus there is a need to set a distance H shown in Fig. 11 as a working distance of the electron beam optical system when the maximum deflection angle θ of the electron beam EB by the deflection lens 30d is set to the same θ as the shaping device 100. For example, there was a need to set the working distance H to about 1200 mm to 1800 mm. Accordingly, the size of the device increases.
b. In addition, an error occurs at irradiation coordinates (an irradiation position) of the electron beam affected by the magnetic field disturbance having a magnitude according to the working distance while the electron beam EB reaches the shaping surface FP from the outlet port of the lens barrel. In addition, a control error at the beam irradiation position by the deflection lens is enlarged according to the working distance H.

Further, while the electron beam EB is deflected with predetermined amplitude in the X-axis direction in the above description, the deflection lens 30d of the electron beam optical system 30b according to the embodiment can deflect the electron beam with the same predetermined amplitude in the Y-axis direction as well. Accordingly, shaping work can be performed while the electron beam is deflected in the X-axis direction and the Y-axis direction in construction work of the shaped object (hereinafter referred to as shaping work).

Further, the number of the beam irradiation units 30 is not limited to three, but can be determined on the basis of the size of the shaped object to be constructed, the maximum deflection angle of the beam in the X-axis direction mainly by the beam irradiation unit, and the like. For example, the number of the beam irradiation units 30 may be 1, 2, or 4 or more.

In the embodiment, for example, as shown in Fig. 3, three reference marks FM₁, FM₂ and FM₃ constituted by 2-dimensional marks are disposed on the upper surface of the reference mark plate 23 with a predetermined positional relation to correspond to the three beam irradiation units 30₁ to 30₃.

In addition, as shown in Fig. 3, three beam monitors, for example, Faraday cups 44₁, 44₂ and 44₃, are disposed on the upper surface of the frame-shaped section 24c on the -Y side of the reference mark plate 23 so as to correspond to the three beam irradiation units 30₁, 30₂ and 30₃. The Faraday cups 44₁, 44₂ and 44₃ are disposed on the -Y sides of the reference marks FM₁, FM₂ and FM₃, respectively. The Faraday cups 44₁, 44₂ and 44₃ detect beam currents of the electron beams EB from the beam irradiation units 30₁, 30₂ and 30₃, respectively, and the detection information is supplied to the controller 20 (see Fig. 16).

Further, a reflection electron detector 54 (see Fig. 16) having three reflection electron detectors 52 configured to individually detect the reference marks FM₁, FM₂ and FM₃ is provided on the shaping device main body section 10. While not shown in the drawings except Fig. 16, the reflection electron detector 54 is disposed in the vicinity of the beam irradiation unit 16. The reflection electron detector 54 has, for example, a holding member, and at least the three reflection electron detectors 52 disposed on the holding member at a predetermined interval in the X-axis direction. As the reflection electron detectors 52, a semiconductor detector, a scintillator, a micro channel plate, and the like are used. Here, the semiconductor detector may be used as the reflection electron detector.

Each of the reflection electron detectors 52 detects a reflection component generated from the reference marks FMᵢ irradiated with the electron beam EB from the beam irradiation units 30ᵢ (i = 1 to 3) (a component of an electron beam (energy beam) via a reference mark), here, reflection electrons, when information for calibration of the beam irradiation position is acquired, which will be described below, and transmits the detection signal corresponding to the detected reflection electrons to the controller 20 via a signal processor 56 (see Fig. 16). Here, the detection signal of each of the reflection electron detectors 52 is amplified by the amplifier in the signal processor 56 and then signal processing is performed, and processing results thereof are sent to the controller 20.

Further, in order to prevent contamination of the reflection electron detectors 52 due to outgas, when the reflection electron detector 54 is conventionally stored in the housing 100A at a predetermined storage position and the reference mark is detected, for example, when information for calibration at a radiating position of the beam is acquired, which will be described below, the unit may be taken out from the storage position by a conveyance system (not shown) below the controller 20 and moved to a position near the beam irradiation unit 16.

In the shaping device main body section 10 according to the embodiment, as shown in Fig. 2, a shaping material supply unit 41, a powder feeder 46 (a rake member) and the preheating unit 50 are disposed to face a +X-side half portion of the rotating table 22. Each of the shaping material supply unit 41 and the powder feeder 46 constitutes a part of the powder applying system 18 (see Figs. 1 and 2).

The shaping material supply unit 41 supplies the powdery shaping material (here, a metal powder) BM (see Fig. 1) onto the shaping plate MP of the table section 32. The shaping material supply unit 41 is disposed above the powder feeder 46 on the +Y side. Further, more on the shaping material supply unit 41 will be described below.

The powder feeder 46 is constituted by a frame-shaped member with a predetermined width and a large length in the X-axis direction, and the length is equal to or somewhat longer than the length of the frame-shaped section 24c of the table base 24 in the X-axis direction.

The preheating unit 50 has substantially the same length as and about a half width of the powder feeder 46 when seen in a plan view, and is disposed adjacent to the -Y side of the powder feeder 46 (with a predetermined void). As the preheating unit 50, in the embodiment, for example, an ultraviolet lamp (UV lamp) is used. A mercury lamp configured to emit ultraviolet light of 254 to 313 nm, a center wavelength of which is 365 nm, a metal halide lamp configured to emit ultraviolet light with a wide wavelength of 200 nm to 450 nm, and the like are known as UV lamps, and either of the mercury lamp and the metal halide lamp may be used as the preheating unit 50.

As shown in Fig. 1, the preheating unit 50 and the powder feeder 46 are disposed on the upper end surface of the frame-shaped section 24c of the table base 24 at a position of a height at which lower end surfaces thereof substantially match with each other (in a state in which the table device 12 is moved directly under the preheating unit 50 and the powder feeder 46, and a predetermined clearance (void, gap) is set above the upper end surface of the frame-shaped section 24c). In Fig. 1, the powder feeder 46 is hidden behind the preheating unit 50.

Here, a positional relation between components of the shaping device main body section 10 when seen in a plan view will be described. As shown in Fig. 3, the three beam irradiation units 30₁ to 30₃ separated from the axis AR1 on the above-mentioned reference line LH are disposed at a predetermined interval, and the powder feeder 46 separated from the axis AR1 by a predetermined distance on the +X side is disposed on an extension line of the reference line LH. The powder feeder 46 has a center in the widthwise direction (Y-axis direction) that substantially matches with the reference line LH. The preheating unit 50 and the shaping material supply unit 41 are disposed adjacent to each other on one side (-Y side) and the other side (+Y side) in the Y-axis direction with the powder feeder 46 interposed therebetween.

Since the shaping material supply unit 41 is configured to temporarily store the powdery shaping material BM (see Fig. 1), a supply port having a predetermined length and a predetermined width that can be opened and closed by a lid section (not shown) is provided on the lower end surface (a surface on the -Z side). In the embodiment, as the shaping material BM, a powder of a metal, for example, titanium, stainless steel, or the like, is used. Hereinafter, the shaping material supply unit 41 is referred to as a powder hopper 41, focusing on its function.

The powder hopper 41 may include a first powder hopper having a first supply port and configured to supply a shaping material from the first supply port, and a second powder hopper having a second supply port at a position different from that of the first supply port and configured to supply a shaping material from the second supply port. In this case, the same type of metal powder or different types of metal powders may be stored inside each of the first powder hopper and the second powder hopper.

A lid section of the powder hopper 41 is configured to be open and closed by an actuator 43 (see Fig. 16), and the actuator 43 is controlled by the controller 20 (see Fig. 16). When the lid section is in a closed state, the shaping material BM of the powder hopper 41 is discharged to the outside via the supply port. In addition, a shaping material supply device (hereinafter, simply referred to as a material supply device) 48 (see Fig. 16) disposed outside the housing 100A is connected to the powder hopper 41 via a material supply pipe (not shown). For this reason, the powder hopper 41 can be supplied with the shaping material BM from the material supply device 48 when needed, and occurrence of shutdown due to a lack of the shaping material BM in the powder hopper 41 (useless down time) is prevented. Supply of the shaping material BM from the material supply device 48 via the material supply pipe is controlled by the controller 20.

Further, a load-lock chamber (not shown) is provided in the housing 100A on the -Y side, a wall of the housing 100A on the -Y side functions as a wall of a boundary with the load-lock chamber, and a door of the load-lock chamber on a vacuum side is provided on the wall. As the door on the vacuum side, a gate valve configured to open and close an opening formed in the wall of the boundary is used. Hereinafter, the door (gate valve) on the vacuum side is referred to as a gate valve 62A (see Fig. 16).

A conveyance robot constituted by, for example, an articulated robot configured to convey the shaping plate MP on which a shaped object (a lump of the shaping material BM), shaping work of which is finished, is placed (a horizontal-articulated robot (SCARA robot) as an example) is provided in the load-lock chamber, and the conveyance robot is configured to cause an arm (robot arm) to enter the housing 100A in a state in which the gate valve 62A is open, receive the shaping plate MP on the table 26 together with the shaped object (a lump of the shaping material BM), and convey them into the load-lock chamber.

An atmosphere-side door is also provided in the load-lock chamber separately from the door on the vacuum side. As the atmosphere-side door, a gate valve configured to open and close an opening formed in the atmosphere-side wall is used. Hereinafter, the atmosphere-side door is referred to as a gate valve 62B (see Fig. 16). The gate valve 62B is closed during shaping work. Meanwhile, while the gate valve 62A may be open during the shaping work when the inside of the load-lock chamber is maintained in a vacuum state of the same level as that in the housing 100A (the vacuum chamber 100A), in the embodiment, when the gate valve 62A is also closed during the shaping work and there is a need to open the gate valve 62A, the inside of the load-lock chamber is vacuum-suctioned in advance.

The gate valve 62A and the gate valve 62B are controlled by the controller 20 (see Fig. 16).

In the embodiment, vacuum suction of the internal space of the vacuum chamber (housing) 100A and vacuum suction in the load-lock chamber are performed by separate vacuum pumps.

Here, while the description is mixed, a moving operation of the table device 12 along the circulation route in the shaping device 100 according to the embodiment will be described with reference to Figs. 3 to 10. The movement is performed by the controller 20 via the moving system 14. As described above, in the embodiment, the table device 12 always faces the same direction, i.e., the direction shown in Fig. 1, Fig. 2, and the like (the back plate section 24b is parallel to the XZ plane). This will also be described below.

Further, in the plan views of Figs. 3 to 10, for convenience of illustration and description, as the table device 12, only the frame-shaped section 24c of the table base 24 is shown. That is, the base section 24a, the back plate section 24b, the table section 32, and the like of the table base 24 are not shown. In addition, as is clear from the above description, while the rotation center (rotating axis) of the rotating table 22 is the axis AR1 and the rotation center (rotating axis) of the table device 12 is the axis AR2 in the embodiment, in the following description of the moving operation of the table device 12 along the circulation route, description of their rotation centers will be appropriately omitted.

In the reference state, it assumed that the table device 12 is at the position shown in Fig. 3. From this reference state, the case in which the rotating table 22 (and the driving gear 21) is driven by the motor 28 of the moving system 14 to move in a clockwise direction when seen in a plan view (hereinafter, simply referred to as clockwise direction) as shown by an arrow CW is considered. From the reference state shown in Fig. 3, when the rotating table 22 is driven to move 45 degrees clockwise as shown by an arrow CW, it becomes as shown in Fig. 4.

In the state shown in Fig. 4, according to the rotation of the rotating table 22, the table device 12 is moved to a position where a line segment that connects the reference point (the axis AR2) and the rotation center (the axis AR1) of the rotating table 22 (hereinafter referred to as a radius vector (AR1-AR2)) forms an angle of -45 degrees with respect to the reference line LH. Here, when the driven gear 29 is not provided, the table device 12 should remain facing the orientation shown by a two-dot chain line (imaginary line) in Fig. 4, i.e., the same orientation as the reference state with respect to the rotating table 22. However, in the embodiment, in conjunction with rotation of the rotating table 22 (and the driving gear 21) in the arrow CW direction, the driven gear 29 rotates 45 degrees counterclockwise when seen in a plan view (hereinafter, simply referred to as counterclockwise) as shown by an arrow CCW, and the table device 12 rotates counterclockwise 45 degrees with respect to the rotating table 22 from the orientation in the reference state according to the rotation of the driven gear 29 (see an arrow Rθz in Fig. 4) and faces an orientation shown by the solid line in Fig. 4.

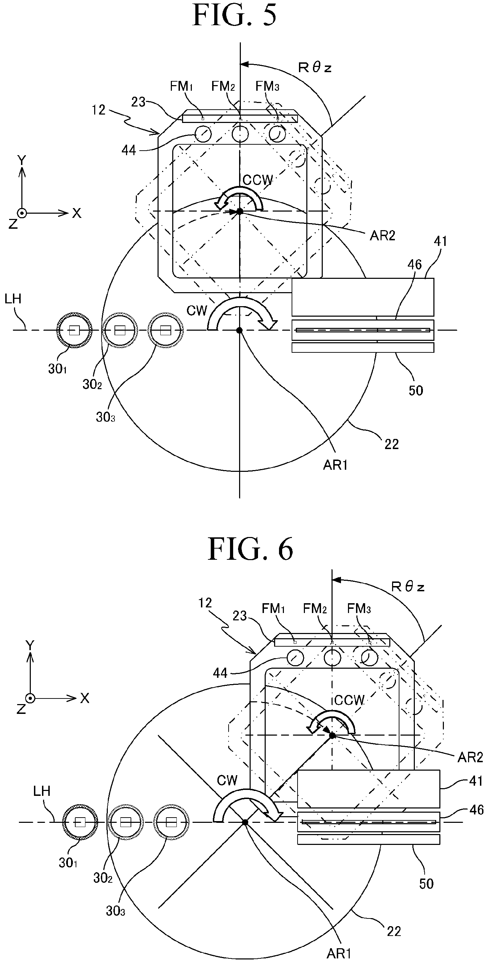

Here, while counterclockwise rotation of 45 degrees shown by the arrow Rθz in Fig. 4 is not performed in a state in which the reference point (the axis AR2) of the table device 12 is moved to the position shown in Fig. 4 and the reference point of the table device 12 is performed while moving from the position shown in Fig. 3 to the position shown in Fig. 4, for convenience of illustration and for the sake of simplification and comprehension of the description in Fig. 4, the table device 12 is shown to rotate counterclockwise 45 degrees in a state in which the reference point of the table device 12 is moved to the position shown in Fig. 4. The same applies to Figs. 5 to 10, which will be described below.

From the state shown in Fig. 4, when the rotating table 22 (and the driving gear 21) is driven by the motor 28 to rotate clockwise to further 45 degrees shown by an arrow CW, it becomes a state shown in Fig. 5.

In the state shown in Fig. 5, according to the rotation of the rotating table 22, the table device 12 moves to a position where a radius vector (AR1-AR2) forms -90 degrees with respect to the reference line LH. The rotating table 22 (and the driving gear 21) rotates clockwise 45 degrees shown by an arrow CW while shifting from the state shown in Fig. 4 to the state shown in Fig. 5, and in conjunction with this, the driven gear 29 rotates counterclockwise 45 degrees as shown by an arrow CCW. The table device 12 rotates counterclockwise 45 degrees (see an arrow Rθz in Fig. 5) from the state shown by a two-dot chain line in Fig. 5 to face the orientation shown by a solid line in Fig. 5 by the rotation of the driven gear 29.

When the rotating table 22 (and the driving gear 21) is driven by the motor 28 to rotate clockwise 45 degrees further shown by the arrow CW from the state shown in Fig. 5, the rotating table 22 is in the state shown in Fig. 6.

In the state shown in Fig. 6, according to the rotation of the rotating table 22, the table device 12 moves to a position where the radius vector (AR1-AR2) forms -135 degrees with respect to the reference line LH. In the embodiment, the rotating table 22 (and the driving gear 21) rotates clockwise 45 degrees shown by the arrow CW while shifting from the state shown in Fig. 5 to the state shown in Fig. 6, and in conjunction with this, the driven gear 29 rotates counterclockwise 45 degrees shown by the arrow CCW. The table device 12 rotates counterclockwise 45 degrees (see an arrow Rθz in Fig. 6) from the state shown by a two-dot chain line in Fig. 6 by the rotation of the driven gear 29 and faces an orientation shown by a solid line in Fig. 6.

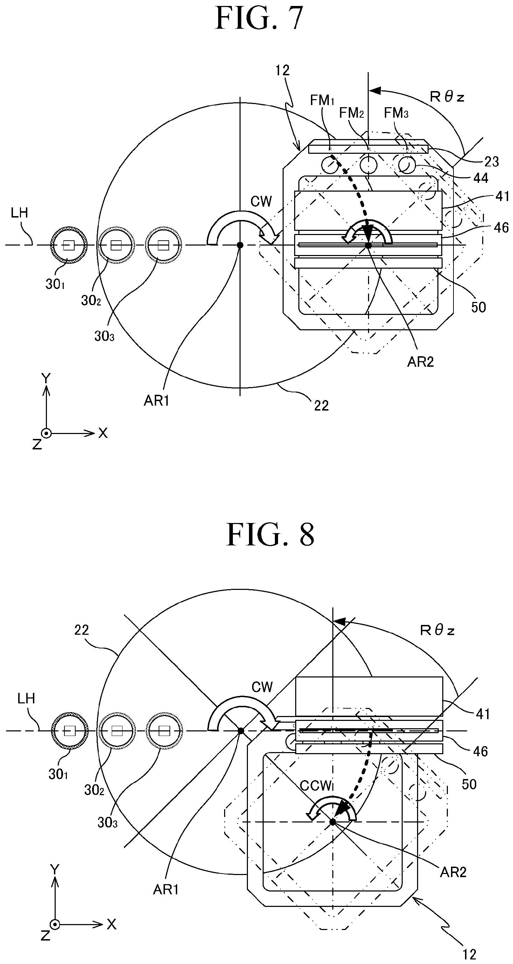

When the rotating table 22 (and the driving gear 21) is driven by the motor 28 to rotate clockwise 45 degrees further shown by the arrow CW from the state shown in Fig. 6, the rotating table 22 is in a state shown in Fig. 7.

In the state shown in Fig. 7, the table device 12 moves to a position where the radius vector (AR1-AR2) forms -180 degrees with respect to the reference line LH. In the embodiment, the rotating table 22 (and the driving gear 21) rotates clockwise 45 degrees shown by the arrow CW while shifting the state shown in Fig. 6 to the state shown in Fig. 7, and in conjunction with this, the driven gear 29 rotates counterclockwise 45 degrees shown by the arrow CCW. The table device 12 rotates counterclockwise 45 degrees (see an arrow Rθz in Fig. 7) from the state shown by a two-dot chain line in Fig. 7 by the rotation of the driven gear 29 and faces an orientation shown by the solid line in Fig. 7.

When the rotating table 22 (and the driving gear 21) is driven by the motor 28 to rotate clockwise 45 degrees further shown by the arrow CW from the state shown in Fig. 7, the rotating table 22 is in a state shown in Fig. 8.

In the state shown in Fig. 8, the table device 12 moves to a position where the radius vector (AR1-AR2) forms -225 degrees with respect to the reference line LH. In the embodiment, the rotating table 22 (and the driving gear 21) rotates clockwise 45 degrees shown by the arrow CW while shifting from the state shown in Fig. 7 to the state shown in Fig. 8, and in conjunction with this, the driven gear 29 rotates counterclockwise 45 degrees shown by the arrow CCW. The table device 12 rotates counterclockwise 45 degrees (see an arrow Rθz in Fig. 8) from the state shown by a two-dot chain line in Fig. 8 by the rotation of the driven gear 29 and faces an orientation shown by a solid line in Fig. 8.

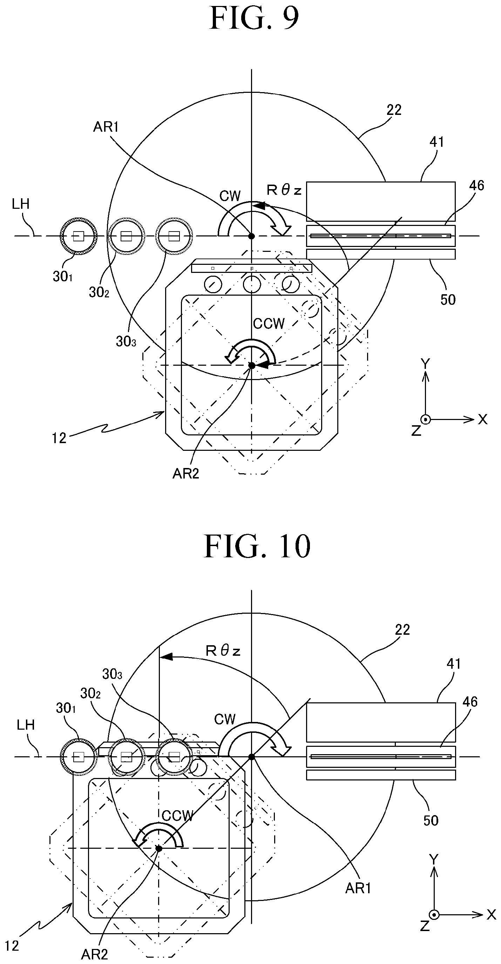

When the rotating table 22 (and the driving gear 21) is driven by the motor 28 to rotate clockwise 45 degrees shown by the arrow CW from the state shown in Fig. 8, the rotating table 22 is in the state shown in Fig. 9.

In the state shown in Fig. 9, the table device 12 moves to a position where the radius vector (AR1-AR2) forms -270 degrees (+90 degrees) with respect to the reference line LH. In the embodiment, the rotating table 22 (and the driving gear 21) rotates clockwise 45 degrees shown by the arrow CW while shifting from the state shown in Fig. 8 to the state shown in Fig. 9, and in conjunction with this, the driven gear 29 rotates counterclockwise 45 degrees shown by the arrow CCW. The table device 12 rotates counterclockwise 45 degrees (see an arrow Rθz in Fig. 9) from the state shown by a two-dot chain line in Fig. 9 by the rotation of the driven gear 29 and faces an orientation shown by a solid line in Fig. 9.

When the rotating table 22 (and the driving gear 21) is driven by the motor 28 to rotate clockwise 45 degrees further shown by the arrow CW from the state shown in Fig. 9, and the rotating table 22 is in a state shown in Fig. 10.

In the state shown in Fig. 10, the table device 12 moves to a position where the radius vector (AR1-AR2) forms -315 degrees (+45 degrees) with respect to the reference line LH. In the embodiment, the rotating table 22 (and the driving gear 21) rotates clockwise 45 degrees shown by the arrow CW while shifting from the state shown in Fig. 9 to the state shown in Fig. 10, and in conjunction with this, the driven gear 29 rotates counterclockwise 45 degrees shown by the arrow CCW. The table device 12 rotates counterclockwise 45 degrees (see an arrow Rθz in Fig. 10) from the state shown by a two-dot chain line in Fig. 10 by the rotation of the driven gear 29 and faces an orientation shown by a solid line in Fig. 10.

When the rotating table 22 (and the driving gear 21) is driven by the motor 28 to rotate clockwise 45 degrees further shown by the arrow CW from the state shown in Fig. 10, and the rotating table 22 is in the reference state shown in Fig. 3.

In the reference state shown in Fig. 3, naturally, in the table device 12, the radius vector (AR1-AR2) is located on the reference line LH. In the embodiment, the rotating table 22 (and the driving gear 21) rotates clockwise 45 degrees shown by the arrow CW while shifting from the state shown in Fig. 10 to the state shown in Fig. 3, and in conjunction with this, the table device 12 rotates counterclockwise 45 degrees shown by the arrow CCW together with the driven gear 29, and the table device 12 is in the reference state.

In the above-mentioned description, while rotation positions of the rotating table 22 at an angular interval of 45 degrees are taken in order to facilitate the overall understanding with respect to the moving operation of the table device 12 along the circulation route in the shaping device 100, the driving gear 21 and the rotating table 22 continuously and repeatedly rotate clockwise within a range of 0 to 360 degrees shown by the arrow CW in actuality, and in conjunction with this, the driven gear and the table device 12 rotate counterclockwise shown by the arrow CCW. Accordingly, movement of the table device 12 is continuously performed.

As is clear from the description so far, in the embodiment, a support member configured to support the shaping plate MP serving as a support surface member is constituted by the table 26, the driving mechanism 31 and the table base 24. That is, in the embodiment, the support member includes all components of the table device 12 except the shaping plate MP.

In the embodiment, there is the first moving device including the motor 28 and the rotating table 22 that is a movable member fixed to the driving shaft 28a of the motor 28 and on which the table device 12 is mounted, and configured to move the table device 12 along the above-mentioned circular circulation route. When the rotating table 22 (the movable member) is moved by the first moving device, the table device 12 (including the above-mentioned support member) is moved with respect to the beam irradiation unit 16 as the beam irradiation device.

In addition, in the embodiment, there is the second moving device including the shaft member 27 or the like rotatably supported by the driving gear 21, the driven gear 29 and the rotating table 22 and connected to the table device 12 and configured to move the table device 12. The table device 12 is moved in conjunction with the change of the position in the horizontal plane of the table device 12 moved by the first moving device such that an orientation in a water surface of the table device 12 is maintained by the second moving device.

As is clear from the above-mentioned description, the moving system 14 includes the first moving device and the second moving device.

Here, formation of the layer of the shaping material performed by the shaping device main body section 10 according to the embodiment will be described.

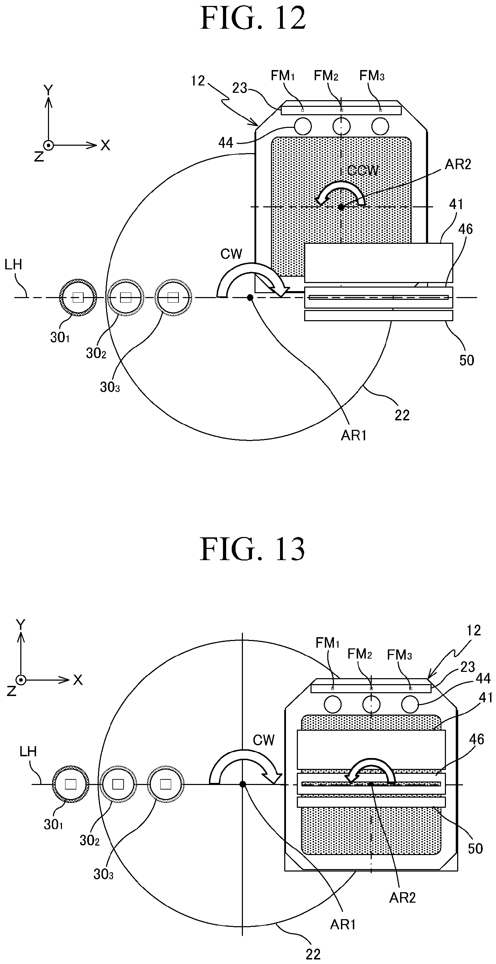

When the table device 12 reaches the position shown in Figs. 12 (and Fig. 6) by the clockwise rotation of the rotating table 22 of the moving system 14 about the axis AR1 and the counterclockwise rotation of the table device 12 about the axis AR2, the controller 20 detects that the table device 12 reaches the material supply position from the measurement information of the position measurement system 42, and the lid of the supply port of the powder hopper 41 is opened via the actuator 43. Accordingly, supply of the shaping material BM from the powder hopper 41 is started from above the support surface SS of the shaping plate MP via the opening of the frame-shaped section 24c. Here, since the rotating table 22 rotates clockwise at a constant rotation speed and the table device 12 rotates counterclockwise at the same constant rotation speed in conjunction (synchronization) with the rotation, no acceleration is applied to the table device 12.

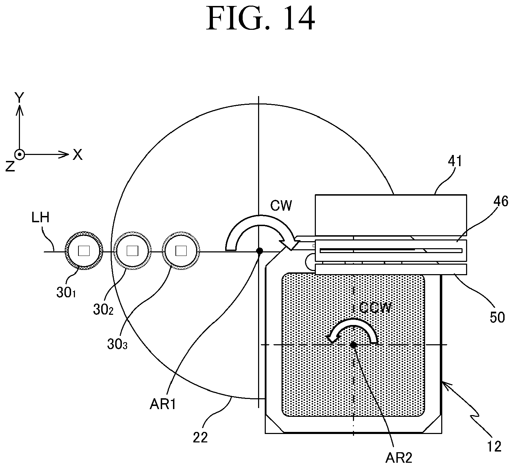

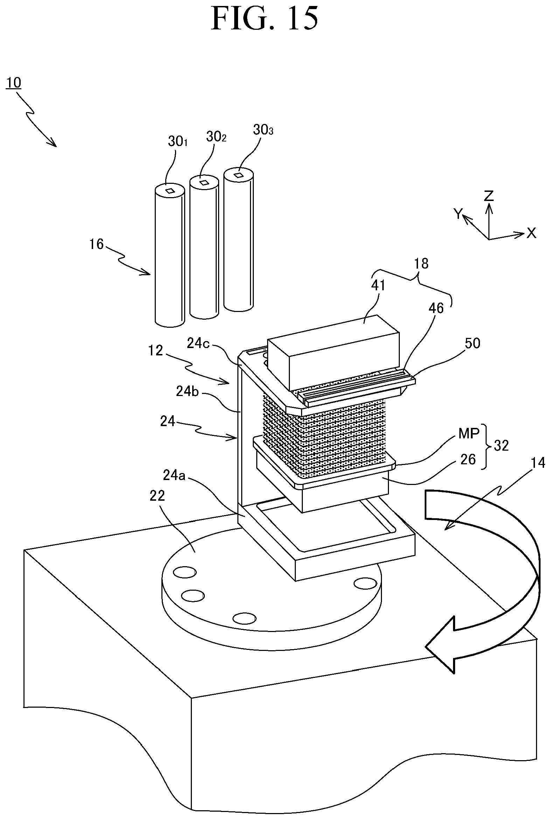

After that, the moving system 14 continues to drive the table device 12 without the above-mentioned acceleration, and the table device 12 moves in the -Y direction substantially in the Y-axis direction to the position shown by Fig. 14 (and Fig. 8) via the position shown in Fig. 13 (and Fig. 7). During the movement, supply of the shaping material BM onto the support surface SS, leveling of the top surface of the supplied shaping material BM, and preheating using the preheating unit 50 with respect to the shaping material BM that has been leveled on the top surface are performed. Here, for example, as shown in Fig. 15, the leveling of the top surface of the shaping material BM is realized by supplying the shaping material BM onto the support surface SS (shaping plate) and moving (the frame-shaped section 24c of) the table device 12 in a state before the shaping material is leveled directly under the powder feeder 46 substantially in the -Y direction. That is, when the table device 12 moves to a position just before reaching the position shown in Fig. 14 from the position shown in Fig. 12 (a position where an end of the powder feeder 46 on the -Y side matches with an end of the opening of the frame-shaped section 24c on the +Y side), the powder bed (a layer of the shaping material laid in a layer shape) is formed on the support surface SS (shaping plate). That is, the powder feeder 46 crosses the working region on the table section 32 through relative movement between the table device 12 and the powder feeder 46, the shaping material BM supplied on the support surface SS (shaping plate) is leveled by the powder feeder 46, and a layer of the laid shaping material BM (powder bed) is formed on the table section 32. As is clear from the theory herein, the frame-shaped section 24c also has a role of restricting the height of the shaping material BM when the powder bed is formed.

Here, while the powder bed is formed on the support surface SS (the shaping plate MP) as a first layer, and a powder bed of the next layer is formed on the powder bed of the previous layer formed on the support surface SS as a second layer and subsequent layers.

Further, in actuality, since the table device 12 moves along a circular route with a radius somewhat smaller than that of the rotating table 22, instead of moving straight directly under the powder feeder 46 in the +Y direction, the table device 12 moves along the circular route in the +Y direction, but here, for the purpose of simplification of description, it assumed that the table device 12 moves directly under the powder feeder 46 in the -Y direction substantially along the Y-axis direction.

In the embodiment, as described above, the powder applying system 18 is configured to include the powder hopper 41 (including the actuator 43 configured to open and close the lid section of the supply port) and the powder feeder 46, and the shaping material supply system is constituted by the powder applying system 18 and the material supply device 48.

Fig. 16 is a block diagram showing an input/output relation of the controller 20 that constitutes a control system of the shaping device 100 as a main component. In Fig. 16, like the beam irradiation units 30₂ and 30₃, in actuality, like the beam irradiation units 30₁, the electron source 30a and the electron beam optical system 30b are included. The components thereof (the electrostatic lens, the electromagnetic lens, the correction coil, the deflection lens, and the like) are included in the electron beam optical system 30b. The controller 20 comprehensively controls components of the shaping device 100 including a microcomputer and the like, and each part shown in Fig. 16. The controller 20 controls the moving system 14 and the beam irradiation unit 16 (the beam irradiation units 30₁ to 30₃) on the basis of 3D data (here, 3-dimensional CAD data) of the shaped object such that an electron beam is selectively radiated to only a portion where the shaping material laid in the working region on the table 26 (the support surface SS) is required as a target. In the embodiment, 3-dimensional CAD data can be input to the controller 20 via an optical disk (DVD disk, blue-ray disk) or the like inserted into an optical drive provided in the controller 20, can be directly input to the controller 20 via an input device such as a keyboard or the like, or can be input to the controller 20 via a communication line such as LAN, the Internet line, or the like. These input means can be generally referred to as an input device. The input of the 3-dimensional CAD data to the controller is also the same in the second and third embodiments, which will be described below. The controller 20 includes an input device configured to input 3D data (3-dimensional CVD data) of the shaped object.

In the shaping device 100 according to the embodiment, a flow of processing is as follows.

First, the motor 28 of the moving system 14 is driven by the controller 20, the rotating table 22 and the driving gear 21 are driven to rotate clockwise, and when a predetermined time elapses after starting of the driving, a rotation speed of the rotating table 22 reaches a predetermined target rotation speed (Vt). After that, the driving of the motor 28 is controlled by the controller 20 such that the rotating table 22 continues to rotate clockwise at the target rotation speed Vt. In conjunction with the constant speed rotation (normal rotation) of the rotating table 22 at the target rotation speed Vt in the clockwise direction, as described above, the table device 12 rotates counterclockwise at a constant speed (normal rotation) with a rotation speed ratio of 1: 1 about the axis AR2. Accordingly, in the table device 12, the orientation in the XY plane is always maintained at a constant orientation.

The table device 12 moves along a circular circulation route with a radius vector (AR1-AR2) as a radius at a constant speed according to the constant speed rotation of the rotating table 22 at the target rotation speed Vt, and during the movement, the orientation of the table device 12 in the XY plane is normally maintained at a constant orientation. Movement of the table device 12 along the circulation route at the constant speed while maintaining the orientation in the XY plane is continued until irradiation of the electron beam with respect to the powder bed of the final layer on the table section 32 is finished after the rotating table 22 reaches the target rotation speed Vt. Hereinafter, this is the premise of the following description.

When the table device 12 moves along the circulation route and reaches the position shown in Fig. 12 (and Fig. 6), the controller 20 detects that the table device 12 reaches the material supply position from the measurement information of the position measurement system 42, and opens the lid of the supply port of the powder hopper 41. Accordingly, a forming work of the powder bed of the first layer (i.e., a layered laying work of the shaping material BM) on the table 26 (the shaping plate MP) is started according to the above-mentioned procedure. Here, there is no shaping material on the shaping plate MP, and the upper surface of the shaping plate MP is located at a position lower than the upper surface of the frame-shaped section 24c by a predetermined distance ΔZ. ΔZ corresponds to the thickness for one layer of the shaping material BM (the powder bed).

After starting of the forming work of the powder bed of the first layer, when the table device 12 moves from the position shown in Fig. 12 (and Fig. 6) to the position shown in Fig. 14 (and Fig. 8) via the position shown in Fig. 13 (and Fig. 7) directly under the powder feeder 46 in the -Y direction substantially along the Y-axis direction, the shaping material BM supplied onto the table section 32 is leveled by the powder feeder 46, and the first layer of the laid shaping material BM (the powder bed of the first layer) is formed on the table section 32.

Further, since the controller 20 can calculate the coordinate position on the XY coordinate system of the reference point (the axis AR2) of the table device 12 at each rotation position of the rotating table 22 on the basis of the measurement information of the position measurement system 42, on the basis of to the calculation result, a configuration capable of adjusting the position of the table 26 in the X-axis direction on the table base 24 may be employed.

In addition, it is somewhat delayed from forming starting of the powder bed, the powder bed (the shaping material BM) of the formed first layer starts to pass directly under the preheating unit 50, and preheating of the powder bed by the preheating unit 50 is started. In the powder bed, energy of ultraviolet light radiated from the preheating unit 50 is converted into heat to increase a temperature of the shaping material BM (metal powder), which becomes a preheated shaping material (preheated powder), and a part of the top surface is melted. The preheating is finished when the table device 12 reaches the position shown in Fig 14 (and Fig. 8). However, the powder bed of the first layer may not be preheated.

After that, shortly before the table device 12 reaches the position shown in Fig. 10 via the position shown in Fig. 9, the three reference marks FM₁ to FM₃ on the reference mark plate 23 are located below the three beam irradiation units 30₁, 30₂ and 30₃, respectively, and electron beams are radiated to the corresponding reference marks FM₁, FM₂ and FM₃ from the three beam irradiation units 30₁, 30₂ and 30₃, respectively. Then, the reflection electrons from the reference marks FM₁, FM₂ and FM₃ are individually detected by the three reflection electron detectors 52 of the reflection electron detector 54, respectively, and the detection signals from the three reflection electron detectors 52 are supplied to the signal processor 56. In the signal processor 56, on the basis of the detection signals from the three reflection electron detectors 52, relative positions in the XY plane between the optical axes AXᵢ (i = 1 to 3) of the electron beam optical system 30b of the beam irradiation units 30₁, 30₂ and 30₃ and the reference marks FMᵢ are obtained. In the controller 20, on the basis of the information of the relative positions in the XY plane between the optical axes AXᵢ of the electron beam optical system 30b of the beam irradiation units 30₁, 30₂ and 30₃ and the reference marks FMᵢ and the measurement information of the position of the table device 12 by the position measurement system 42 upon detection of the reference marks FMᵢ, deviations of the beam irradiation units 30₁, 30₂ and 30₃ from the reference positions of the optical axes AXᵢ of the electron beam optical system 30b are obtained, and information (calibration information) of these deviations are stored (or these deviations are corrected).

After that, shortly after the table device 12 reaches the position shown in Fig. 10, the powder bed on the table 26 (the shaping plate MP) are located below the three beam irradiation units 30₁, 30₂ and 30₃. Here, in the controller 20, selective irradiation (radiation to at least a part) of the electron beam EB to the first layer of the shaping material BM on the table 26 from the three beam irradiation units 30₁, 30₂ and 30₃ is started (see Fig. 17). Here, on the basis of the acquired calibration information, deviations of the beam irradiation units 30₁, 30₂ and 30₃ from the reference positions of the optical axes AXᵢ of the electron beam optical system 30b via the deflection lens are compensated (corrected) (calibration of the beam irradiation position is executed). Further, in Fig. 17, since several layers of the powder bed have already been formed on the table 26 (the shaping plate MP), while the aspect of the radiation of the electron beam EB to the powder bed of the first layer is not shown, a scene of the radiation of the electron beams of the three beam irradiation units 30₁, 30₂ and 30₃ is the same for the powder bed of the first layer.

Selective radiation of the electron beam EB is performed by the controller according to 2-dimensional shape data obtained by slicing the shaped object on design that is previously prepared (a shaped object represented by 3-dimensional CAD data) at ΔZ interval (ΔZ corresponds to a thickness of each layer of the shaping material BM (powder bed)). Here, as the 2-dimensional shape data, for example, 3-dimensional CAD data are converted into, for example, stereo lithography (STL) data, and further, data of each layer obtained from the 3-dimensional STL data and sliced in the Z axis direction are used.

The shaping material BM (metal powder) of the region corresponding to the 2-dimensional shape data is melted by selective irradiation of the electron beam EB. Here, in the controller 20, selectively melting of the shaping material BM (powder bed) of the first layer on the table 26 (the shaping plate MP) is started by controlling the deflection lens 30d of the beam irradiation units 30ᵢ and deflecting the electron beam EB within a range of an amplitude d in the X-axis direction and the Y-axis direction, selective melting of the shaping material BM of the first layer on the table section 32 is continued by performing irradiation control of the electron beam EB while the table device 12 moves from the position of irradiation starting of the electron beam to the position immediately before the position shown in Fig. 4 via the position shown in Fig. 3 in the +Y direction substantially along the Y-axis direction, and irradiation of the electron beam (electron beam for melting) to the shaping material BM of the first layer on the table section 32 from the beam irradiation units 30₁ to 30₃ is finished upon reaching the position immediately before the position shown in Fig. 4. The melted shaping material BM is solidified when a predetermined time elapses according to the material.

After termination of the irradiation process of the electron beam for melting of the shaping material of the first layer, the table section 32 is lowered by the controller 20 via the driving mechanism 31 by ΔZ while formation of the powder bed of the second layer is started. Here, in the shaping material of the first layer, the melted shaping material is solidified.

After that, when the table device 12 reaches the position shown in Fig. 12 (and Fig. 6), the lid of the supply port of the powder hopper 41 is opened by the controller 20. Accordingly, in the same procedure as the formation of the powder bed of the above-mentioned first layer, a powder bed of a second layer is formed by a new shaping material BM laid on the shaping material of the first layer, a part of which is solidified. In addition, it is somewhat delayed from formation starting of the powder bed, the formed powder bed starts to pass immediately under the preheating unit 50, preheating of the powder bed is started using the preheating unit 50, and the preheating is finished when the table device 12 reaches the position shown in Fig. 14 (and Fig. 8).

In the powder bed after the second layer, by the preheating of the above-mentioned shaping material, the internal stress of the solidified portion of the previous layer among the shaping material is released and distortion is less likely to occur.

After termination of the preheating, acquisition of information for calibration of beam irradiation positions of the beam irradiation units 30₁, 30₂ and 30₃ according to movement of the table device 12 along the circulation route and selective irradiation of the electron beams by the beam irradiation units 30₁, 30₂ and 30₃ according to data of each layer obtained from 2-dimensional STL data with respect to the powder bed of the second layer on the table section 32 are performed like in the case of the above-mentioned first layer, and thus, an irradiation process (processing with respect to the powder bed of the second layer) of the electron beam for melting of the shaping material of the second layer is finished. Even in the second layer, the melted shaping material BM is solidified when the predetermined time according to the material elapses.

After termination of the irradiation process of the electron beam for melting of the shaping material of the second layer, by repeating lowering of the table 26 by ΔZ, formation of the next layer (a new uppermost layer) of the shaping material BM, preheating of the shaping material BM of the uppermost layer, acquisition of the information for calibration of the beam irradiation position of the beam irradiation units 30₁, 30₂ and 30₃, irradiation of the electron beams to the shaping material BM of the preheated uppermost layer, lowering of the table 26 by ΔZ, formation of a new uppermost layer of the shaping material BM, preheating of the shaping material BM of the uppermost layer, acquisition of information for calibration of the beam irradiation positions, and irradiation of the electron beam to the shaping material BM of the preheated uppermost layer the same as mentioned above, a shaped object is constructed on a support surface by overlapping layers of the melted and solidified shaping material BM (metal powder) each other. Accordingly, a series of operations for shaping through PBF of the shaping device 100 are finished.

After the series of operations for shaping are finished, since the driving mechanism 31 is driven by the controller 20 and the table 26 is provide to carry out the constructed shaped object, they are moved downward to a downward moving limit position or the vicinity thereof. At the same time, the reflection electron detector 54 may be stored in the housing 100A at a predetermined storage position.

In the shaping device 100, when the above-mentioned shaped object is constructed, prior to the irradiation process of the electron beams for melting of the shaping material BM of each layer, after the termination of the preheating for that layer, the above mentioned acquisition of the information for calibration of the beam irradiation positions is executed, and the beam irradiation positions are compensated by controlling the deflection of the electron beams on the basis of the information (calibration information) obtained from the detection results of the three reflection electron detectors 52. Accordingly, accurate management of the beam irradiation positions (position coordinates) becomes possible. However, acquisition of the calibration information at the beam irradiation positions does not necessarily have to be performed for each layer, acquisition of the calibration information at the beam irradiation positions may be performed prior to irradiation of the beam with respect to the powder bed of the next layer whenever the irradiation process of the electron beam with respect to the continuous layers of the predetermined number of two or more is finished, and it is possible to manage the beam irradiation positions (position coordinates) with high accuracy by obtaining drifts of the beam irradiation positions on the basis of the calibration information and by correcting such drifts.

After the series of operations for shaping by the above-mentioned PBF are finished, the gate valve 62A of the load-lock chamber on the vacuum side is opened by the controller 20, and a lump of the shaping material BM including the shaped object constructed on the table section 32 is carried out. The carry-out is performed as an example as follows.

That is, the above-mentioned conveyance robot disposed in the load-lock chamber invades the arm into the housing 100A, and moves a fork-shaped hand portion provided at a tip to below the shaping plate MP on which a lump of the shaping material BM including the constructed shaped object is placed. Here, suction of the shaping plate MP by the table 26 is released. Next, both end portions of the shaping plate MP in the X-axis direction are supported by the hand portion from below, and the shaping plate MP is lifted together with the lump of the shaping material BM and separated from the table 26 to be conveyed into the load-lock chamber.

Further, when the gate valve 62A on the vacuum side is opened, vacuum suction of the inside of the load-lock chamber is completed to provide a vacuum environment substantially equal to that of the inside of the housing (vacuum chamber) 100A.

After that, a separate shaping plate is conveyed onto the table 26 by a conveyance robot, an arm of the robot is returned into the load-lock chamber, and then, the gate valve 62A of the load-lock chamber on the vacuum side is closed.

Further, a separating work of the lump of the shaping material BM and the shaping plate MP may be performed in the load-lock chamber, and the separated shaping plate MP may be conveyed onto the table 26 again.

After that, in the housing 110A, a shaping work for constructing the next shaped object is started. Meanwhile, in the load-lock chamber, an extra shaping material, which is not solidified, in the lump of the shaping material BM is dropped by blast or compressed air in parallel with the shaping work in the housing 110A. During a work for removing the extra shaping material, natural cooling of the shaping material is performed.

After that, the gate valve 62B of the load-lock chamber on the atmosphere-side is opened, and then, the shaped object is taken out to the outside. After that, the gate valve 62B is closed.

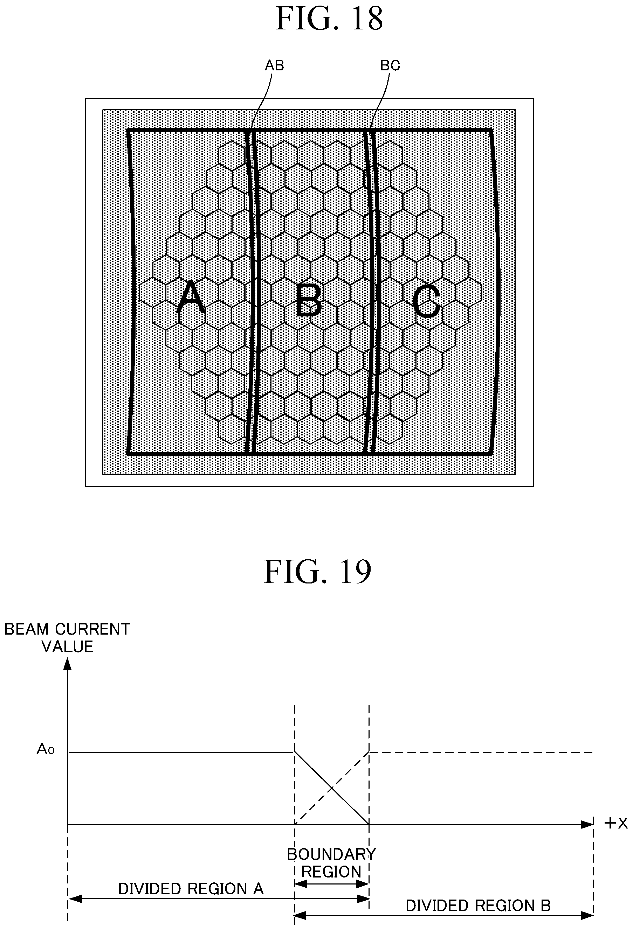

In the shaping device 100 according to the embodiment, the beam irradiation unit 30ᵢ is configured to include the electron source 30a and the electron beam optical system 30b configured to radiate electrons generated in the source 30a to a target (a layer of a shaping material) as electron beams, and the shaping device 100 includes the plurality of, for example, three (i = 1 to 3) beam irradiation units 30ᵢ. Accordingly, in the shaping device 100, in the irradiation of electron beams to the powder bed (the layer of the shaping material BM), for example, as shown in Fig. 18, the layer of the shaping material is divided into three regions, to which references signs A, B and C are attached, (each referred to as a divided region A, a divided region B and a divided region C) with partial ring band shapes (an arc-shaped band shape with a predetermined width), and it is possible for the three beam irradiation units 30₁ to 30₃ to take charge of irradiation of the electron beams with respect to the divided regions A, B and C, respectively, i.e., it is possible for the three beam irradiation units to share the shaping work with respect to the shaping material of each layer.

In Fig. 18, parts of the divided region A and the divided region B overlap each other, and parts of the divided region B and the divided region C overlap each other. Hereinafter, the overlapped partial arc-shaped region is referred to as a boundary region. Both of the beam irradiation unit 30₁ and the beam irradiation unit 30₂ are in charge of a boundary region AB between the divided region A and the divided region B. In the boundary region AB, strength of the electron beams radiated from the beam irradiation units 30₁ and 30₂ is set such that a sum of a beam current value of the electron beam radiated from the beam irradiation unit 30₁ and a beam current value of the electron beam radiated from the beam irradiation unit 30₂ is equal to a beam current value of another region in the divided region A. Similarly, both of the beam irradiation unit 30₂ and the beam irradiation unit 30₃ are in charge of a boundary region BC between the divided region B and the divided region C shown in Fig. 18. In the boundary region BC, strength of the electron beams radiated from the beam irradiation unit 30₂ and 30₃ is set such that a sum of the beam current value of the electron beam radiated from the beam irradiation unit 30₂ and the beam current value of the electron beam radiated from the beam irradiation unit 30₃ is equal to a beam current value of other region in the divided region C.

In this case, for example, in the boundary region AB, for example, as shown in Fig. 19, the beam current value of the electron beam radiated from the beam irradiation units 30₁ may be gradually (linearly) reduced to become zero from a predetermined value Ao from an end portion at the -X side to an end portion at the +X side, and the beam current value of the electron beam radiated from the beam irradiation units 30₂ may be gradually (linearly) increased to become the predetermined value Ao from zero from the end portion of the -X side to the end portion on the +X side. That is, in the boundary region AB, the beam current value may be graded or may be stitched. The boundary region BC is also the same.

In the embodiment, drawing of the entire surface of the target is performed by parallelly performing deflection of the electron beam EB and movement of the table device 12 in the +Y direction substantially along the Y-axis direction.

In the shaping device 100 according to the embodiment, on the basis of the above-mentioned shaping sequence, irradiation (including deflection) of the electron beam by the beam irradiation units 30ᵢ is controlled based on the positional information of the table device 12 in the XY plane measured in the position measurement system 42 by the controller 20 during the shaping work.

As described above, according to the shaping device 100 of the first embodiment, the moving system 14 moves the table device 12 in the horizontal plane along the circular circulation route around the axis AR1 using the radius vector (AR1-AR2) as a radius while maintaining the orientation of the table device 12 in the horizontal plane at the constant orientation. Then, while the table device 12 makes a round along the circulation route, a series of processes for shaping such as formation of the powder bed (the layer of the shaping material BM) on the table 26 (the table section 32), preheating with respect to the formed powder bed, acquisition of the information for calibration of the irradiation position of the electron beam, selective irradiation of the electron beam, and the like, are performed. Moreover, since these processes can be performed in the middle of movement (normal movement) at the constant speed without applying the acceleration to the table device 12, shaping processing with high accuracy and high throughput is possible.

In addition, according to the shaping device 100, since the beam irradiation unit 16 includes the three beam irradiation units 30ᵢ disposed in the X-axis direction crossing the circulation route, in comparison with the case in which the beam irradiation unit 30 is one, productivity can be greatly improved. In addition, in comparison with the case in which the beam irradiation unit 30 is one, a working distance between the beam irradiation units 30 can be reduced, reduction in size of these devices becomes possible, influence of a magnetic field disturbance is reduced, and thus, a control error of irradiation coordinates (irradiation position) of the electron beam can be reduced. In particular, when a configuration in which a target can be irradiated with a plurality of beams is employed as the beam irradiation units 30ᵢ, a finer beam spot can be formed.

In this way, according to the shaping device 100 of the first embodiment, it is possible to realize both of improvement of productivity and improvement of shaping precision simultaneously.

Further, in the embodiment, as a result of that the orientation of the table device 12 in the XY plane is maintained at the constant orientation during rotation of the rotating table 22 (during movement in the first rotation direction) while provided that the upper surface (support surface) SS of the shaping plate MP supported on the table 26 is parallel to the horizontal plane, a posture of the support surface SS is made constant. However, the posture of the support surface SS may be constantly maintained through adjustment such that the support surface SS of the shaping plate MP supported on the table 26 is parallel to the XY plane during rotation of the rotating table 22 using a mechanism capable of adjustment of a position in a θx direction and a θy direction as well as a position in the Z direction of the table 26 as the driving mechanism 31.

In addition, in the case in which a driving mechanism capable of adjustment of a position with 3 degrees of freedom in the above-mentioned Z, θx and θy directions is used, when the table device 12 (including the above-mentioned support member) is moved by the above-mentioned first moving device, the table 26 may be moved by the driving mechanism to maintain an angular relation of an axis in the X direction along the support surface SS with respect to an axis crossing the optical axis AXᵢ of the beam irradiation units 30₁ to 30₃ of the beam irradiation unit 16 (for example, an axis along the upper surface of the frame-shaped section 24c passing through the optical axes AXᵢ of the beam irradiation units 30₁ to 30₃).

Further, in the embodiment, as a result of employing the system having the configuration in which a driving gear and a driven gear meshed with each other are rotated in opposite directions as the moving system 14, the case in which the table device 12 is moved along the circular circulation route has been exemplified as a moving system. However, the route is not limited to the circular circulation route, and a moving system configured to move the table device 12 along a circulation route other than a circular shape such as an elliptical shape, an oblong shape, or the like, may be employed. That is, the moving system may move the table device in the horizontal plane along the predetermined circulation route while maintaining the orientation of the table device in the horizontal plane at the constant orientation. In addition, the moving system may not move the table device at the constant speed in the entire segment of the circulation route, and for example, it may be only possible to move the table device at the constant speed only in a moving segment of the table device, in which the electron beam is radiated to the powder bed, or in addition, a moving segment of the table device when the powder bed is formed on the table. The moving system may maintain the orientation of the table device in the horizontal plane at the constant orientation, for example, only in the segment in which the table device is moved at the constant speed, not the entire segment of the circulation route. In addition, the moving system may move the table device along the predetermined circulation route using a mechanism other than a gear mechanism, for example, a belt mechanism or the like.

In addition, in the embodiment, the case in which the electron beam is deflected in the X-axis direction and the Y-axis direction simultaneously the table 26 on which the shaping material is laid is moved substantially in the Y-axis direction, and the electron beam EB is radiated to the shaping material to perform shaping of the shaped object has been exemplified. However, the table 26 may be movable in a 2-axis direction in the horizontal plane, for example, in the X-axis direction and the Y-axis direction perpendicular to each other. For example, in a case in which a moving route of the table device 12 is an arc-shaped route or the like when the electron beam is selectively radiated to the powder bed on the table 26, the table 26 may be movable on the table base 24 in the X-axis direction according to the position of the table device 12 in the Y-axis direction.

### <<Second embodiment>>

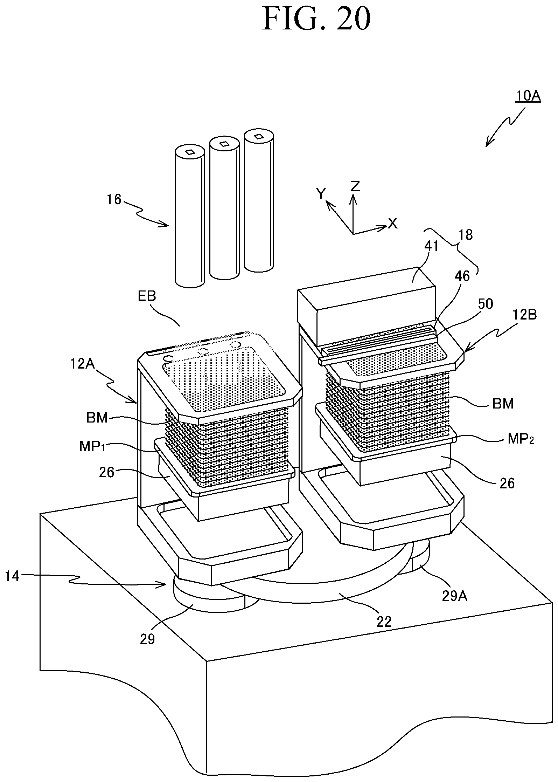

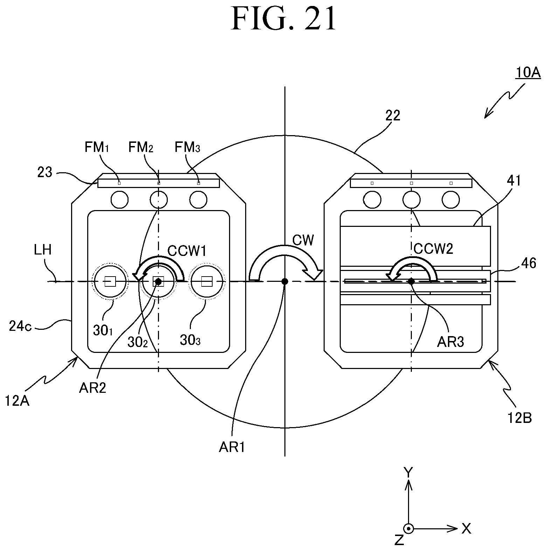

Next, a second embodiment will be described with reference to Figs. 20 and 21. Here, the same or equivalent components as the shaping device 100 according to the above-mentioned first embodiment are designated by the same reference signs and description thereof will be simplified or omitted.

Fig. 20 is a perspective view showing a configuration of a shaping device main body section 10A that constitutes a shaping device according to the second embodiment. In the shaping device according to the second embodiment, instead of the above-mentioned the shaping device main body section 10, the shaping device main body section 10A is similarly disposed in a vacuum chamber the housing 100A.

While the shaping device main body section 10A is distinguished from the shaping device main body section 10 according to the above-mentioned first embodiment in that a plurality of, for example, two (a pair of) table devices are provided on the above-mentioned rotating table 22 and the moving system 14A configured to move the two table devices along the predetermined circulation routes is provided instead of the moving system 14, the configuration of the other portions are the same as in the shaping device main body section 10. Hereinafter, the shaping device main body section 10A will be described focusing on differences from the shaping device main body section 10. Hereinafter, the two table devices are referred to as table devices 12A and 12B for identification purposes, respectively, as shown in Fig. 20.

The table devices 12A and 12B each is configured similarly to the above-mentioned table device 12 as shown in Figs. 20 and 21, and are mounted at different positions on the rotating table 22 as an example of the first member (and the movable member) movable around the first axis AR1 parallel to the Z axis which is perpendicular to the horizontal plane.

The shaping plate MP₁ is placed on the table 26 of the table device 12A as a first support surface member, and the shaping plate MP₂ is placed on the table 26 of the table device 12B as a second support surface member. In the second embodiment, the upper surface of the shaping plate MP₁ becomes the first support surface on which the shaped object (first shaped object) is formed, and the upper surface of the shaping plate MP₂ becomes the second support surface on which the shaped object (second shaped object) is formed.

Like the above-mentioned first embodiment, the rotating table 22 is integrally attached to the upper end of the driving shaft 28a of the motor 28 to be coaxial with the driving shaft 28a (see Fig. 1). The driving gear 21 is coaxially attached to the driving shaft 28a (see Fig. 1). The rotating table 22 is driven by the motor 28 to rotate, for example, clockwise about the central axis AR1 (see Figs. 21 and 1) of the driving shaft 28a via the driving shaft 28a when seen in a plan view (see an arrow CW of Fig. 21).

The table device 12A has a lower end on which the driven gear 29 is provided, and a lower surface to which an upper end of the shaft member 27 supported on the rotating table 22 via a bearing section (not shown) is connected. For this reason, as shown by a plan view in Fig. 21, the table device 12A is configured to rotate counterclockwise as shown by an arrow CCW1 about the central axis AR2 of the shaft member 27 at a rotation speed ratio of 1: 1 when seen in a plan view in conjunction with the clockwise rotation shown by an arrow CW about the rotating axis AR1 of the rotating table 22 when seen in a plan view. Further, in Fig. 21, for convenience of illustration and description, only the frame-shaped section 24c of the table base 24 is shown as the table devices 12A and 12B.

In addition, the table device 12B has a lower end on which a separate driven gear 29A having the same shape as that of the driven gear 29 is provided, and a bottom surface to which an upper end of a separate shaft member having the same shape as that of the shaft member 27 supported on the rotating table 22 via the bearing section is connected. The separate shaft member has a central axis AR3 shown in Fig. 21. The driven gear 29A has a disk shape with the same diameter as that of the driving gear 21 and has a gear portion that meshes with the gear portion of the driving gear 21 and that has the same shape and the same size with the gear portion of the driving gear 21 on the outer circumferential portion thereof. For this reason, as shown in Fig. 21, the table device 12B is configured to rotate counterclockwise shown by the arrow CCW2 about the axis AR3 at the rotation speed ratio of 1: 1 when seen in a plan view in conjunction with the clockwise rotation of the rotating table 22 shown by the arrow CW when seen in a plan view.

That is, in the second embodiment, the table device 12A and the table device 12B are simultaneously rotated counterclockwise at the same rotation speed as that of the rotating table 22 in conjunction with the clockwise rotation of the rotating table 22 shown by the arrow CW. As a result, like the above-mentioned table device 12, each of the table devices 12A and 12B moves along the circular circulation route, and always faces the same direction in the XY plane, i.e., the direction shown in Figs. 20 and 21 regardless of the movement position. In addition, when the rotating table 22 rotates at the constant rotation speed, each of the table devices 12A and 12B moves at the constant speed along the above-mentioned circular circulation route.

As shown in Fig. 21, on a straight line in the X-axis direction in which the reference line LH is extended, the table device 12B is disposed at a position that matches with a point where the reference point (the axis AR3 that is a rotation center) of the table device 12B is symmetrical (point-symmetrical and laterally symmetrical) to the reference point (the axis AR2 that is a rotation center) of the table device 12A while having the rotation center (the axis AR1) of the rotating table 22 as a reference.

Each of the table devices 12A and 12B is moved at the constant speed by the constant speed rotation of the rotating table 22 at the target rotation speed Vt like the above-mentioned table device 12, and is moved along the circular circulation route while maintaining the orientation at an orientation shown in Figs. 20 and 21. In addition, during the movement, as described above, a series of processes for constructing a shaped object are performed on the tables of the table devices 12A and 12B. Movement of the table devices 12A and 12B along the circulation route at the constant speed while maintaining the orientation in the XY plane is continued until irradiation of the electron beam to the powder bed of the final layer on the table section 32 is finished after the rotating table 22 reaches the target rotation speed Vt. Accordingly, the table devices 12A and 12B face the respective parts disposed on the circulation route such as the beam irradiation unit 16 or the like in sequence.

As is clear from the description so far, in the second embodiment, the first support member that supports the shaping plate MP₁ as a first support surface member is constituted by the table device 12A (the shaping plate MP₁ is not included), and the second support member that supports the shaping plate MP₂ as a second support surface member is constituted by the table device 12B (the shaping plate MP₂ is not included).

In the second embodiment, the first moving device configured to move each of the two table devices 12A and 12B along the similar circular circulation route as in the above-mentioned first embodiment is provided while including the rotating table 22 which is fixed to the motor 28 and the driving shaft 28a of the motor 28 and on which the two table devices 12A and 12B are mounted. By moving the rotating table 22 (movable member) with the first moving device, the table device 12A (including the above-mentioned first support member) and the table device 12B (including the above-mentioned second support member) are moved with respect to the beam irradiation unit 16 as the beam irradiation device.

In addition, in the second embodiment, the second moving device configured to move the two table devices 12A and 12B is provided while including the two shaft members and the like that are rotatably supported by the driving gear 21, the driven gears 29 and 29A and the rotating table 22 and that are connected to (the table bases 24 of) the table devices 12A and 12B. The two table devices 12A and 12B are moved in conjunction with the position changes in the horizontal plane of the two table devices 12A and 12B moved by the first moving device such that the orientation in the horizontal plane of each of the two table devices 12A and 12B is maintained by the second moving device.

As is clear from the description, the moving system 14A includes the first moving device and the second moving device.

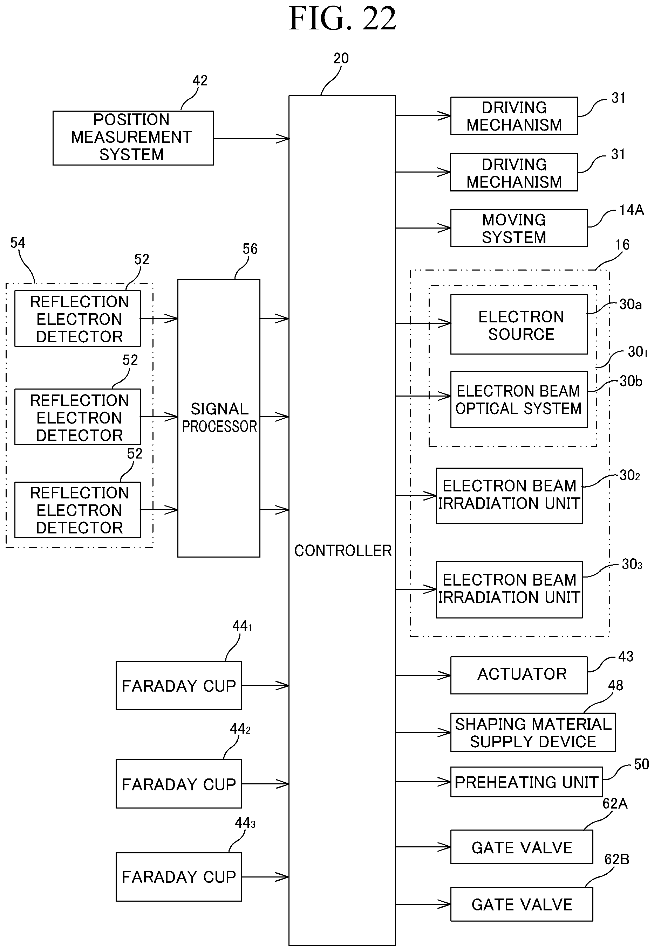

In the shaping device main body section 10A according to the second embodiment, the position measurement system 42 (see Fig. 22) configured to detect a rotation angle from the reference position of the rotating table 22 about the axis AR1 is provided. The measurement information of the position measurement system 42 is supplied to the controller 20. The controller 20 can obtain a position of a reference point of the table device 12A, i.e., a position of the axis AR2 that is a rotation center of the table device 12A in the horizontal plane, and a position of a reference point of the table device 12B, i.e., a position of the axis AR3 that is a rotation center of the table device 12B in the horizontal plane (for example, a coordinate position on the XY coordinate system using the axis AR1 as an origin) on the basis of the information of the rotation angle from the position measurement system 42. Accordingly, the position measurement system 42 functions as a position measurement system configured to measure positional information in the horizontal plane of the reference point for each of the table devices 12A and 12B.

Fig. 22 is a block diagram showing an input/output relation of the controller 20 that mainly constitutes the control system of the shaping device according to the second embodiment. In Fig. 22, the two driving mechanisms 31 constitute a driving mechanism configured to individually vertically move the tables 26 provided in each of the table devices 12A and 12B. The controller 20 includes a microcomputer and the like, and comprehensively controls the components of the shaping device including the respective parts shown in Fig. 22. The controller 20 controls the moving system 14A, and the beam irradiation unit 16 (the beam irradiation units 30₁ to 30₃) on the basis of the 3D data of the shaped object such that the electron beam is selectively radiated to only the required portion of the shaping material laid in the working region on the table 26 of each of the table devices 12A and 12B as a target.

Even in the shaping device according to the second embodiment, the similar load-lock chamber as in the first embodiment is provided in the vicinity of the -Y side in the vacuum chamber, and in a step in which the shaping processing for constructing the shaped object is finished on both of the two table devices 12A and 12B, the similar processing as in the above-mentioned first embodiment is performed in the load-lock chamber. Further, in the second embodiment, two conveyance robots may be provided in the load-lock chamber, or only one conveyance robot may be provided in the load-lock chamber.

As described above, since the shaping device according to the second embodiment includes the entire configuration of the shaping device 100 according to the first embodiment, the same effects as in the above-mentioned first embodiment can be obtained. In addition, in the shaping device according to the second embodiment, since disposition of the beam irradiation units 30₁ to 30₃ of the beam irradiation unit 16, the powder feeder 46, the powder hopper 41 and the preheating unit 50 with respect to the rotation center (the axis AR1) of the rotating table 22 is set to a positional relation as shown in Fig. 21 and disposition in which the table device 12A and the table device 12B are laterally symmetrical to the straight line in the Y-axis direction passing through the rotation center of the rotating table 22 is employed, an irradiation process of an electron beam to the powder bed (the layer of the shaping material) on the table (referred to as one table) 26 provided in the one table device 12A (or 12B), formation of the powder bed on the table (referred to as the other table) 26 provided in the other table device 12B (or 12A) and a preheating process of the formed powder bed are parallelly performed.

Here, while it is desirable that the process of forming the powder bed on the other table is performed at least partially in parallel with the irradiation process of the electron beam on the side of the table, the preheating process on the side of the other table may not be performed in parallel with the irradiation process of the electron beam on the side of the one table. The preheating process on the side of the other table may be performed until irradiation of the electron beam to the formed powder bed is started after formation of the powder bed on the other table is finished.

In the shaping device main body section 10A according to the second embodiment, during one rotation of the rotating table 22, acquisition of calibration information of the beam irradiation position of the beam irradiation units 30ᵢ using the reference marks FMᵢ (i = 1 to 3), irradiation of the electron beam to a powder bed of an n^{th} layer (n is a natural number), and formation and preheating of a powder bed of a (n+1)^{th} layer are performed in sequence at the side of the one table device (for example, the table device 12A), and in parallel with these, formation and preheating of the powder bed of the n^{th} layer, acquisition of calibration information of the beam irradiation position of the beam irradiation units 30ᵢ using , the reference marks FMᵢ(i = 1 to 3), and irradiation of the electron beam to the powder bed of the n^{th} layer are performed in sequence on the side of the other table device (here, the table device 12B). That is, while the table device 12A makes a round along the circular circulation route, a series of processing processes required for shaping on the side of the table device 12A is performed once, the other the table device 12B makes a round along the circulation route in parallel with this, and a series of processing processes required for shaping on the side of the table device 12B is performed once. Accordingly, in comparison with the above-mentioned first embodiment, it is possible to achieve substantially twice the processing capability. Moreover, double throughput can be realized by increasing the number of table devices by one in the same configuration as that of the shaping device main body section 10 according to the above-mentioned first embodiment without providing two of the each parts of the shaping device main body section.

That is, in the second embodiment, while the rotating table 22 rotates once, a relative positional relation between the beam irradiation unit 16 and the first support surface and a relative positional relation between the beam irradiation unit 16 and the second support surface are changed by the moving system 14A. Specifically, the table device 12A and the table device 12B are moved like the above-mentioned table device 12 in the plane parallel to the XY plane according to the rotation of the rotating table 22. Accordingly, in the beam irradiation unit 16 and each of the shaping plate MP₁ and MP₂, positions of which are fixed, a positional relation is changed in the XY plane crossing the irradiation direction of the electron beam EB. In this case, a positional relation of the beam irradiation unit 16 and each of the shaping plate MP₁ and MP₂ is changed at least in the Y-axis direction, and the first, second and third emitting ports of the beam irradiation unit 16 are disposed in the X-axis direction crossing the Y-axis direction.

In the shaping device main body section 10A, since the tables 26 provided in the table devices 12A and 12B are vertically moved independently from each other, eventually, the first support surface and the second support surface move independently in the irradiation direction of the electron beam EB.

In addition, the shaping material BM is supplied onto the first support surface of the shaping plate MP₁ and the second support surface of the shaping plate MP₂ by the powder applying system 18. The powder hopper 41 supplies the shaping material from the supply port that can face the first support surface or the second support surface. While the powder applying system 18 includes the powder feeder 46, in the embodiment, the shaping material BM supplied from the supply port of the powder hopper 41 is leveled at the height of the upper surface of the frame-shaped section of the table devices 12A and 12B by the powder feeder 46, and the powder bed (the layer of the shaping material) is formed on the first support surface or the second support surface.

In the shaping device according to the second embodiment, the irradiation region of the energy beam is formed on the shaping material on the first support surface in the duration (first duration) in which irradiation of the electron beam to the powder bed of the n^{th} layer (n is a natural number) on the first support surface is performed, and the irradiation of the electron beam to the powder bed of the n^{th} layer on the second support surface is performed (the irradiation region of the energy beam is formed on the shaping material on the second support surface) in the second duration different from the first duration. The shaping material is supplied to the first support surface by the powder applying system 18 in a third duration, and the shaping material is supplied to the second support surface in a fourth duration different from the third duration. Here, the first duration and the fourth duration at least partially overlap each other, and the second duration and the third duration at least partially overlap each other. Accordingly, the entire throughput as the shaping device is improved.

In addition, in the shaping device according to the second embodiment, a center of gravity in the XY plane of the portion in which the table devices 12A and 12B are combined matches with the rotating axis AR1. For this reason, it is possible to minimize falling of the rotating axis AR1 of the moving system 14A.

Further, while the case in which each of the two table devices 12A and 12B moves along the circular circulation route has been exemplified in the second embodiment, it is not limited thereto and a plurality of table devices may move along the circulation route other than the circular shape, for example, an elliptical circulation route, an oblong (oval) circulation route including a straight route partially, or the like. The point is that the plurality of table devices move along the same circulation route, and during movement of the table devices along the circulation route, the above-mentioned series of processes may be performed to construct the shaped object. For example, when the oblong circulation route is employed, the moving system configured to move the table devices 12A and 12B along the circulation route may be configured using, for example, a belt driving mechanism or the like.

In addition, during movement of the plurality of table devices along the same circulation route, an irradiation process of an electron beam to a powder bed on a table of one table device and a process of forming a powder bed on a table of the other table device may be performed in at least partially parallel with each other.

In addition, at least two sets of the powder applying systems 18 (powder hoppers, powder feeders) and the preheating units may be disposed on the circulation route such that the processes of the same process are parallelly performed using different table devices at different positions on the same circulation route, for example, the circular circulation route. Alternatively, the series of processes for constructing the shaped object may be configured to be parallelly performed on different tables. For example, each of the powder applying system 18, the preheating unit, the electron beam irradiation unit, and the like, may be provided in plural, and these may be disposed at different positions on the same circulation route. For example, like the second embodiment, when the same driving system as in the first moving device having the rotating table is employed in a part of the moving system configured to move the plurality of table device along the circular circulation route, if the radius of the rotating table becomes larger than a certain level, it is possible to secure a space in which each of the powder hopper, the preheating unit, the electron beam irradiation unit, and the like, are provided in plural in the circular circulation route through which the table device moves. For example, the sets of the powder hoppers, the preheating units, the electron beam irradiation units, and the like, may be disposed in the same circulation route by the same number as that of the table device.

Further, in the first and second embodiments, while each of the reference marks FMᵢ and the beam monitors 42ᵢ are provided by three to individually correspond to the beam irradiation units 30₁, 30₂ and 30₃, respectively, at least one of the reference mark and the beam monitor may be provided by only one.

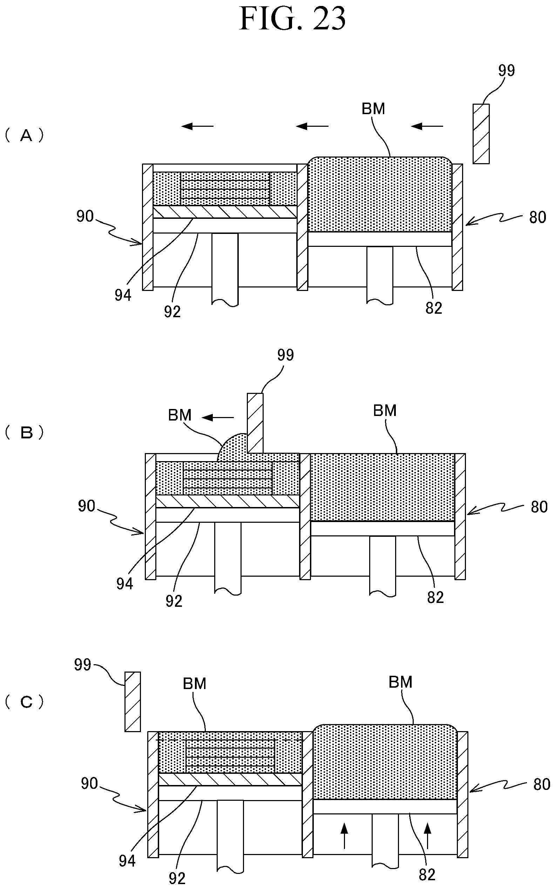

In addition, while the case in which the powder hopper 41 is disposed above the moving route of the table device 12, and the powder applying system configured to supply the shaping material on the table section 32 from above, specifically, on the support surface SS of the shaping plate MP supported by the table 26 is employed as the material supply device has been described in the first and second embodiments, it is not limited thereto and a system configured to supply a shaping material onto the support surface SS from below may be employed as the material supply device. For example, as disclosed in US Patent Publication No. 2013/0168902, a system including a tank-shaped supply section in which a powder material (shaping material) used in shaping is accommodated, a shaping section adjacent to the supply section and forming the similar tank shape that constitutes a shaping region, and a transporting member (corresponding to the rake member) may be employed as the material supply device. The system (for the purpose of convenience, referred to as a shaping material supplyingsystem) is shown in Figs. 23(A) to 23(C). In the shaping material supplying system, a bottom wall 82 of a supply section 80 and a bottom wall 92 (corresponding to the table 26 of the first embodiment) of a shaping section 90 can be raised and lowered, and the shaping material BM is pushed up by moving the bottom wall 82 of the supply section 80 upward as shown in Fig. 23(A) and exposed from the upper surface of the supply section 80 to a predetermined amount. Here, the bottom wall 92 of the shaping section 90 is set to a position where an upper surface (corresponding to the support surface SS) of a plate-shaped shaping stand 94 (corresponding to the above-mentioned shaping plate MP) disposed thereon or an upper surface of the uppermost layer of the shaping material BM formed on the shaping stand 94 is lower from the uppermost surface of the shaping section 90 by the predetermined distance. Then, as shown in Fig. 23(A), when a transporting member 99 is moved to sequentially pass above the supply section 80 and above the shaping section 90 from the outside of the supply section 80, as shown in Fig. 23(B), the exposed shaping material BM is supplied to the shaping section 90 and simultaneously leveled at the height of the upper end surface of the shaping section 90 by the transporting member 99, and the layer of the shaping material BM (powder bed) is formed (see Fig. 23(C)). Further, in the shaping material supplying system, as shown in Fig. 23(C), in parallel with formation of the powder bed, the bottom wall 82 is moved upward to cause the shaping material BM in the supply section 80 to be exposed from the upper surface of the supply section 80 by the predetermined amount to be provided for formation of the powder bed of the next layer.

For example, in the shaping device including the table device moving along the circulation route, when the shaping material supplying system is employed as the material supply device, the shaping material is supplied from the supply port that can face the beam irradiation device (the beam irradiation unit 16). For example, when the table device 12 of the first embodiment includes the shaping section, the tank-shaped supply section in which the shaping material used in shaping is accommodated is disposed adjacent to the table device 12, and moved along the circulation route together with the table device 12. In this case, while an upper opening of the tank-shaped supply section corresponding to a supply port for a shaping material, the supply port can face the beam irradiation device (the beam irradiation unit 16) during movement of the tank-shaped supply section along the moving route.

Further, while the position of the powder hopper 41 of the powder applying system 18 is fixed in the first and second embodiments, for example, a configuration that can move in the XY plane facing the support surface SS, the first support surface and the second support surface may be employed, and a configuration in which a member provided with a supply port is movable may be employed. Similarly, while the position of the beam irradiation unit 16 is also fixed, for example, a configuration that is movable in the XY plane facing the support surface SS, the first support surface and the second support surface may be employed.

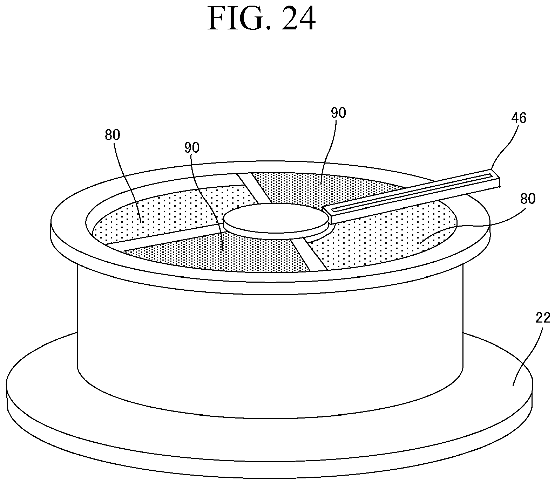

In addition, in the second embodiment, instead of the table devices 12A and 12B and the powder hopper 41, it is conceivable to use the system having the pluralities of the supply sections 80 and the shaping sections 90 described above. As the system in this case, for example, as shown in Fig. 24, a configuration having a cylindrical appearance, an upper surface of which is open, and in which the supply section 80 and the shaping section 90 are divided into four so that two of them are symmetrically arranged on each circumference can be considered. It is conceivable that the system is mounted on the rotating table 22 and used together with the powder feeder 46 in a state in which the central axis of the cylindrical portion matches with the above-mentioned central axis AR1. In this case, the preheating unit is disposed at a position that does not interfere with formation of the powder bed. In addition, while the beam irradiation unit 16 may be provided by only one, two beam irradiation units 16 may be provided to perform irradiation of the electron beam EB in parallel with the shaping sections 90 disposed at two places.

While the case in which the first moving device that constitutes the moving system has the movable member (the rotating table 22) and the second moving device moves the table section 32 (including the support member) in conjunction with the movement of the movable member has been described in the first and second embodiments, it is not limited thereto and the first moving device and the second moving device may share the same movable member like a third embodiment, which will be described below. That is, the second moving device may indirectly move the support member.

### <<Third embodiment>>

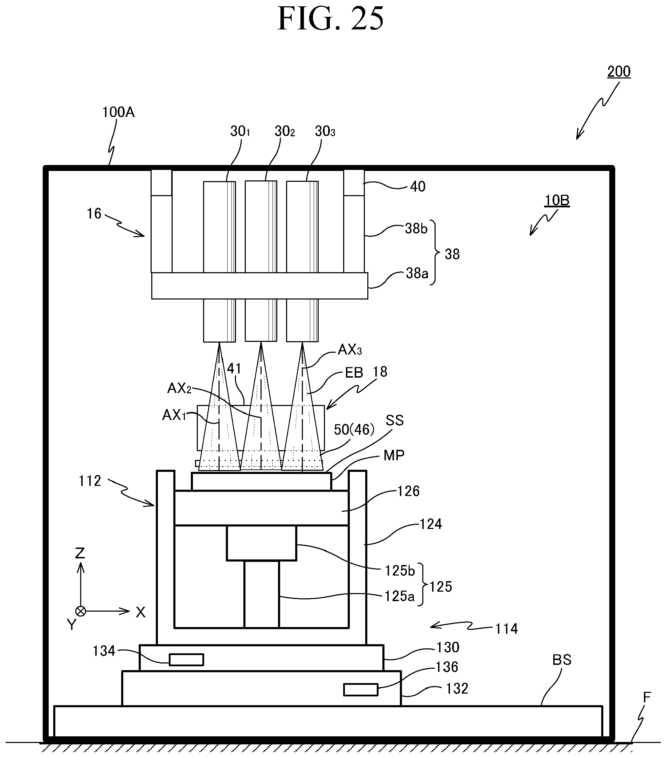

Fig. 25 is a view schematically showing a configuration of a shaping device 200 according to a third embodiment as a partial cross section. The shaping device 200 includes a vacuum chamber (housing) 100A installed on a floor surface F, and a shaping device main body section 10B disposed in the vacuum chamber 100A.

The shaping device main body section 10B is distinguished from the shaping device main body section 10 according to the above-mentioned first embodiment in that a table device 112 is provided instead of the above-mentioned table device 12, a moving system 114 is provided instead of the moving system 14, and a powder applying system 18 and the like are disposed on the +Y side of the beam irradiation unit 16 (on the back side in Fig. 25). Hereinafter, the shaping device 200 will be described focusing on differences from the shaping device 100 according to the first embodiment.

The table device 112 has a bottomed tubular frame member 124, a table 126 that is vertically movable along an inner wall surface of the frame member 124, and a driving mechanism 125 configured to drive the table 126 in the upward/downward direction. While the bottomed tubular member having, for example, substantially a square shape when seen in a plan view is used as the frame member 124, it is not limited thereto and the shape when seen in a plan view may be a circular shape, a polygonal shape, or the like, as long as the frame member has a bottomed tubular shape, an upper surface of which is open. Like the above-mentioned frame-shaped section 24c, the reference marks FMᵢ and the beam monitors 44ᵢ (i = 1 to 3) are provided on an upper surface of a sidewall of the frame member 124 on the -Y side (a front side in Fig. 25).

The table 126 is constituted by a plate member with a predetermined thickness. The shaping plate MP is mounted on the upper surface of the table 126 in a state in which the upper surface is parallel to the horizontal plane. The shaping plate MP is detachably attached to the upper surface of the table 126, and in the third embodiment, the upper surface of the shaping plate MP becomes the support surface SS on which the shaping material is supplied. The driving mechanism 125 has a Z axis 125a, a lower end of which is fixed to a center of an inner bottom surface of the frame member 124, extending in the upward/downward direction (Z axis direction), and a Z driving section 125b that is vertically movable along the Z axis 125a. A part of the Z driving section 125b is integrally attached to the table 126. For this reason, when the Z driving section 125b is vertically moved along the Z axis 125a, the table 126 is vertically moved along the inner circumferential surface of the frame member 124. The table 126 is vertically movable between a first position shown in Fig. 25 and a second position below the first position by the predetermined distance (a somewhat shorter distance than a total thickness of the table 126 and the Z driving section 125b in the Z axis direction).

Further, the driving mechanism 125 may be configured to move the table 126 in a θx direction (a rotation direction about the X axis) and a θy direction (a rotation direction about the Y axis) in addition to the Z axis direction via the Z driving section 125b.

The moving system 114 includes the frame member 124 that functions as a movable member, a fine motion stage 130 having an upper surface on which the frame member 124 is placed, a rough motion stage 132 configured to support the fine motion stage 130 on a base BS, a fine motion actuator 134 configured to finely move the fine motion stage 130 on the rough motion stage 132 in the X-axis direction, the Y-axis direction and the θz direction, and a rough motion actuator 136 configured to drive the rough motion stage 132 on the base BS in an XY 2-dimensional direction. The base BS is disposed on a bottom wall of the vacuum chamber 100A in a state in which the upper surface is parallel to the XY plane. The fine motion actuator 134 enables accurate positioning of a driving object in comparison with the rough motion actuator 136. The rough motion actuator 136 has an output larger than that of the fine motion actuator 134. For example, a voice coil motor or the like is used as the fine motion actuator 134, and for example, a linear motor or the like having a relatively large output is used as the rough motion actuator 136. When electric motors are used as the rough motion actuator 136 and the fine motion actuator 134, it is desirable to apply a magnetic shield to a motor to prevent a leakage of a magnetic force to the outside from the motor as possible.

In the shaping device main body section 10B, the powder hopper (shaping material supply unit) 41, the powder feeder 46 (rake member) and the preheating unit 50 are disposed on the +Y side of the beam irradiation unit 16 (a back side in Fig. 25). Each of the powder hopper 41 and the powder feeder 46 constitutes a part of the powder applying system 18.

The powder hopper 41 is disposed above the powder feeder 46 on the +Y side. The preheating unit 50 is disposed adjacent to the powder feeder 46 on the -Y side (a front side in Fig. 25) (with a predetermined void).

As shown in Fig. 25, the preheating unit 50 and the powder feeder 46 are disposed at a position of a height where each lower end surface thereof substantially matches with the upper end surface of the frame member 124 (in a state in which the table device 112 is moved directly below the preheating unit 50 and the powder feeder 46, a predetermined clearance (void, gap) is set above the upper end surface of the frame member 124). In Fig. 25, the powder feeder 46 is hidden by the preheating unit 50 on the back side of the drawing.

The configuration of the other portion of the shaping device main body section 10B is the same as that of the above-mentioned shaping device main body section 10.

In the shaping device 200 according to the third embodiment, the shaping work is performed in basically the same procedure as the shaping device 100, except the moving operation of the table device 112 upon formation and preheating of the powder bed and irradiation of the electron beam EB to the powder bed.

When the powder bed is formed, the table device 112 disposed at the predetermined position (material supply starting standby position) on the +Y side with respect to a disposed position of the powder hopper 41 is driven by the rough motion actuator 136 and moved below the powder hopper 41 linearly in the Y-axis direction from the material supply starting standby position to the -Y side. During movement of the table device 112, the shaping material is supplied onto the shaping plate MP from the powder hopper 41, and a top surface thereof is uniformly leveled by the powder feeder 46. Accordingly, the powder bed of the n^{th} layer is formed on the upper surface (support surface) SS of the shaping plate MP, and preheating of the formed powder bed is performed according to further movement of the table device 112 in the -Y direction.

After the preheating of the powder bed, when the table device 112 further moves in the - Y direction, the electron beam EB is radiated to the reference marks FMᵢ on the frame member 124 from the beam irradiation units 30₁, and after acquisition of information for calibration of the beam irradiation positions of the beam irradiation units 30ᵢ via the reflection electron detector 54 and the signal processor 56, irradiation of the electron beam EB to the powder bed of the n^{th} layer is performed. The irradiation of the electron beam EB is performed on the basis of the 3D data of the shaped object of the shaping object, and at this time, position control in the XY plane of the fine motion stage 130 according to necessity is performed in addition to the deflection control of the electron beam such that the beam irradiation position is adjusted on the basis of the acquired information for calibration of the beam irradiation position. Here, the moving direction (fine motion direction) of the fine motion stage 130 may be the same direction (-Y direction) as the moving direction of the rough motion stage 132 upon irradiation of the electron beam EB, may be an opposite direction (reverse direction, +Y direction), or may be a crossing direction (+X direction or -X direction).

In the shaping device 200, in the series of operations from formation of the powder bed of the n^{th} layer to irradiation of the electron beam EB to the powder bed of the n^{th} layer, the table device 112 is linearly moved from the +Y direction to the -Y direction as described above, and after termination of the irradiation of the electron beam EB to the powder bed of the n^{th} layer, the table device 112 is driven by the rough motion actuator 136, moves to the +Y side from the position (irradiation ending position) in the Y-axis direction and returns to the material supply starting standby position. During movement of the table device 112 to the +Y side, the table 126 is driven downward by the driving mechanism 125 by the predetermined distance. For this reason, after the table device 112 reaches the material supply starting standby position, the series of operations from formation of the powder bed of the next layer (the (n+1)^{th} layer) to irradiation of the electron beam EB to the powder bed of the (n+1)^{th} layer can be directly performed.

According to the shaping device 200 of the above-mentioned third embodiment, by linearly driving the rough motion stage 132 in the -Y direction, formation of the powder bed, preheating of the formed powder bed and irradiation of the electron beam EB to the powder bed can be sequentially performed using the table device 112 mounted on the rough motion stage 132 via the fine motion stage 130.

Further, while the case in which the moving direction of the table 126 by the rough motion stage 132 via the frame member 124 is a linear direction has been exemplified in the third embodiment, it is not limited thereto and the direction may be a curve direction, for example, a direction along an arc-shaped route (a rotation direction).

In addition, while the case in which the table device 112 includes the frame member 124 constituted by a bottomed tubular shape member having a square shape when seen in a plan view has been described in the third embodiment, instead of the frame member 124, a U-shaped member when seen in a plan view, a sidewall of the frame member 124 on the -Y side is removed, may be used. The above-mentioned reference marks FMᵢ may be disposed on the upper end surface of the sidewall section of the member on the +Y side. However, in this case, since the reference marks FMᵢ reaches below the beam irradiation units 30ᵢ after irradiation of the electron beam to the powder bed of the n^{th} layer, adjustment of the beam irradiation position may be performed before irradiation of the electron beam to the powder bed of the next layer on the basis of the detection result of the reference mark (the detection result of the beam irradiation position).

Further, in the third embodiment, two sets of the powder applying systems 18 and the preheating units 50 may be provided. In this case, the two sets are preferably disposed on one side and the other side in the Y-axis direction with the irradiation region of the electron beam EB from the beam irradiation unit 16 sandwiched therebetween. In the one set disposed in the irradiation region of the electron beam EB on the +Y side, the powder applying system 18 and the preheating unit 50 are disposed at the same disposition (positional relation) as in the third embodiment, and in the other set disposed in the irradiation region of the electron beam EB on the -Y side, the powder applying system 18 and the preheating unit 50 are disposed at disposition symmetrical to the one set.

As a result, in the series of operations from formation of the powder bed of the n^{th} layer to irradiation of the electron beam EB to the powder bed of the n^{th} layer, the table device 112 is linearly moved from the +Y direction to the -Y direction as described above, after irradiation of the electron beam EB to the powder bed of the nth layer, the table device 112 is moved from the -Y side to the +Y side in the Y-axis direction as described above after the table 126 is moved directly downward by the predetermined distance at the position (irradiation ending position), and then, during the movement, the series of operations can be performed from formation of the powder bed of the next layer (the (n+1)^{th} layer) to irradiation of the electron beam EB to the powder bed of the (n+1)^{th} layer. That is, the reciprocal operation of the table device 112 enables processing of the two layers in succession, the reciprocal operation of the table device 112 can be continuously performed, and thus, a significant improvement in throughput can be expected.

First, in the first to third embodiments (hereinafter, referred to each embodiment), while the three beam irradiation units 30₁ to 30₃ of the beam irradiation unit 16 are disposed in the moving direction of the shaping plate MP as the support surface member, i.e., a direction crossing the direction in which positional relations (relative positions) between the beam irradiation units 30₁ to 30₃ and the shaping plate MP are changed, it is not limited thereto and the plurality of beam irradiation units may be disposed 2-dimensionally in a direction crossing the direction in which the positional relation (relative position) between the beam irradiation unit and the shaping plate is changed and in a direction along the direction in which the positional relation is changed. In particular, when amplitude of the beam of the one beam irradiation unit 30 covers the entire working region, the plurality of beam irradiation units may be disposed in the direction in which the positional relation (relative position) between the beam irradiation unit and the shaping plate is changed.

In addition, in each of the embodiments, a vibration proof device configured to reduce vibrations transmitted to the shaping device from the floor surface F may be provided between the shaping device 100 and the floor surface F. In addition, an inclination adjustment mechanism configured to match the rotating axis AR1 (and/or the rotating axis AR2) of the table device 12 with the gravity direction may be provided between the shaping device 100 and the floor surface F. In addition, the vibration proof device or the inclination adjustment mechanism may be provided on a leg portion of the stand 33.

Further, while the preheating unit 50 is disposed adjacent to downstream from the rake member in each of the embodiments, the preheating unit 50 may be disposed upstream from the rake member. Here, the preheating unit 50 may be disposed between the material supply position and the rake member by the powder feeder 46.

In addition, while the shaping material is supplied onto the table section 32 (onto the support surface SS of the shaping plate MP supported on the table 26) from the powder hopper 41 disposed above the moving route of the table device 12 in the first and second embodiments, in this case, as the shaping progresses, there may be an influence due to the weight of the supplied shaping material. Further, in the first and second embodiment, since the table device 12 that is rotationally driven is configured to move at a constant speed around the axis AR1, while the influence can be reduced in comparison with the case in which the table device 12 accelerates or decelerates, the influence may be further reduced using a technique of monitoring a rotation speed of a rotating table and feeding the monitored result back to the control of the motor 28, a technique of controlling a torque of the motor 28 according to the number of layers of the shaping material, a technique of controlling the torque of the motor 28 according to a supply amount of the shaping material, or the like. In addition, while it is conceivable that the position of the table device 12 or the moving system 14 in the Z direction is changed due to the weight of the shaping material supplied onto the table section 32, positions of the reference marks FM₁, FM₂ and FM₃ in the Z direction may be monitored and the irradiation units 30₁ to 30₃ may be controlled according to the monitored result.

In addition, in each of the embodiments, while there is a concern that a load applied to the driving mechanism 31 configured to vertically move the table section 32 (the table 26) may be changed as the shaping progresses, a compression spring or a piston configured to cancel a weight thereof may be incorporated below the table section 32 (the table 26).

In addition, while the case in which the support member includes the table base 24, the frame member 124, or the like, in addition to the table configured to directly support the shaping plate MP, has been described in each of the embodiments, the support member configured to support the shaping plate MP as the support surface member may include a member configured to directly support at least the shaping plate MP.

Further, while the case in which the electron beam is used as the energy beam radiated to the shaping material has been described in each of the embodiments, it is not limited to the electron beam, and in addition, a charged particle beam may be used. Alternatively, an energy beam such as a laser beam or the like, in addition to the charged particle beam, may also be used. When the laser beam is used, preheating may not always be necessary depending on the shaping material.

In addition, while the case in which the metal powder is used as the shaping material has been described in each of the embodiments, it is not limited thereto and, of course, a powder other than a metal may be used and a shaping material other than a powder material may be used as long as the shaping work can be performed by irradiation of an energy beam.

While the case in which the first axis AR1 and the second axis AR2 are parallel to the Z axis has been described in the first and second embodiments, at least one of the first axis AR1 and the second axis AR2 may be inclined with respect to the Z axis. In this case, a driving mechanism configured to adjust an inclination angle of the support surface SS with respect to the horizontal plane may be used as the driving mechanism 31.

In addition, in each of the embodiments, while shapes of a member, an opening, a hole, or the like, may be described as a circular shape, a rectangular shape, or the like, needless to say, it is not limited to these shapes.

Further, the plurality of components of each of the embodiments may be appropriately combined. Accordingly, some of the plurality of components may not be used.

### [Reference Signs List]

12, 12A, 12B...table device, 14, 14A...moving system, 16...beam irradiation unit, 18...powder applying system, 20... controller, 21... driving gear, 22...rotating table, 23...reference mark plate, 24...table base, 24c...frame-shaped section, 26... table, 27... shaft member, 28...motor, 28a... driving shaft, 29, 29A... driven gear, 30i... electron beam irradiation unit, 30a... electron source, 30b... electron beam optical system, 31... driving mechanism, 42... position measurement system, 41...shaping material supply unit, 46... powder feeder, 48... material supply device, 50...preheating unit, 52...reflection electron detector, 100... shaping device, 100A...housing, BM... shaping material, EB...electron beam, FM₁ to FM₃...reference marks

## Claims

1. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface;
a reference mark to which the energy beam is radiated; and
a movement device configured to move the reference mark with repsect to the beam irradiation device.

2. The shaping device according to claim 1, wherein the movement device is configured to move the support member.

3. The shaping device according to claim 1 or 2, wherein the beam irradiation device has a plurality of beam irradiation units disposed along a direction crossing a movement direction of the support member.

4. The shaping device according to claim 3, wherein the plurality of reference marks are provided.

5. The shaping device according to claim 4, wherein number of the plurality of the beam irradiation units disposed and number of the plurality of reference marks provided are same.

6. The shaping device according to any one of claims 3 to 5, wherein a plurality of reflection component detector configured to detect a reflection component from the reference mark, to which the energy beam from the beam irradiation unit is radiated, are provided.

7. The shaping device according to any one of claims 1 to 6, the shaping device comprising:
a reflection component detector configured to detect a reflection component from the reference mark to which the energy beam from the beam irradiation device is radiated,
wherein the reflection component detector is capable of being stored at a storing position.

8. The shaping device according to any one of claims 1 to 7, wherein the beam irradiation device radiates electron beam, and
the reflection component detector detects a reflecting electron generated by irradiation of the reference mark with the electron beam.

9. The shaping device according to any one of claims 1 to 8, wherein the beam irradiation device is controlled based on a reflection component from the reference mark.

10. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface;
a beam monitor configured to detect the energy beam; and
a movement device configured to move the beam monitor with repsect to the beam irradiation device.

11. The shaping device according to claim 10, wherein the movement device is configured to move the support member.

12. The shaping device according to claim 10 or 11, wherein the beam irradiation device has a plurality of beam irradiation units disposed along a direction crossing a movement direction of the support member.

13. The shaping device according to claim 12, wherein the plurality of beam monitors are provided.

14. The shaping device according to claim 13, wherein number of the plurality of the beam irradiation units disposed and number of the plurality of beam monitors provided are same.

15. The shaping device according to any one of claims 10 to 14, wherein the beam irradiation device radiates electron beam, and
the beam monitor detects beam current of the electron beam.

16. A shaping device configured to shape a shaped object on a first support surface and a second support surface, the shaping device comprising:
a beam irradiation device configured to irradiate a shaping material on the first support surface and a shaping material on the second support surface with an energy beam;
a first support member configured to support a first support surface member which includes the first support surface;
a second support member configured to support a second support surface member which includes the second support surface; and
a movement device configured to move a rotation portion, which includes the first and second support members, around a rotation axis.

17. The shaping device according to claim 16, wherein the movement device is set as a first movement device, the rotation axis is set as a first axis and a rotation direction about the first axis is set as a first rotation direction,
the shaping device further comprising:
a second movement device that is configured to move the first support member in a second rotation direction about a second axis and that is configured to move the second support member in a third rotation direction about a third axis.

18. The shaping device according to claim 17, wherein, when the support member moves in the first rotation direction, the second axis and the third axis move around the first axis.

19. A shaping device configured to shape a shaped object on a support surface, the shaping device comprising:
a material supply device configured to supply a shaping material onto the support surface;
a beam irradiation device configured to irradiate the shaping material on the support surface with an energy beam; and
a support member configured to support a support surface member which includes the support surface;
wherein the support surface is tiltable with respect to irradiation direction of the energy beam.

20. The shaping device according to claim 19, the shaping device further comprising:
a movement device configured to move the support member.

21. The shaping device according to claim 20, wherein the movement device moves the support member in a rotation direction about a rotation axis.

22. The shaping device according to claim 18, wherein the movement device is set as a first movement device, the rotation axis is set as a first axis and the rotation direction is set as a first rotation direction,
the shaping device further comprising:
a second movement device that is configured to move the support member in a second rotation direction about a second axis.

23. The shaping device according to claim 22, wherein, when the support member moves in the first rotation direction, the second axis moves around the first axis.

24. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface;
a movement device configured to move the support member with respect to the beam irradiation device; and
a controller configured to control the movement device based on a movement speed of the support member.

25. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface;
a movement device configured to move the support member with respect to the beam irradiation device; and
a controller configured to control the movement device based on an amount of the shaping material supplied onto the support surface.

26. The shaping device according to claim 24 or 25, wherein the movement device moves the support member in a rotation direction about a rotation axis.

27. The shaping device according to claim 26, wherein the movement device is set as a first movement device, the rotation axis is set as a first axis and the rotation direction is set as a first rotation direction,
the shaping device further comprising:
a second movement device that is configured to move the support member in a second rotation direction about a second axis.

28. The shaping device according to claim 27, wherein, when the support member moves in the first rotation direction, the second axis moves around the first axis.

29. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface; and
a movement device configured to move the support member with respect to the beam irradiation device;
wherein the movement device moves the support member at a constant speed when the shaping material on the support surface passes an irradiation position of the energy beam from the beam irradiation device.

30. A shaping device configured to shape a shaped object on a support surface, the shaping device comprising:
a material supply device configured to supply a shaping material onto the support surface;
a plurality of beam irradiation units configured to irradiate the shaping material on the support surface with an energy beam from each of the plurality of beam irradiation device;
a support member configured to support a support surface member which includes the support surface; and
a blocking plate which is disposed between the plurality of beam irradiation units and the support member and onto which a plurality of openings, through which the energy beam from the plurality of beam irradiation units pass, are formed.

31. The shaping device according to claim 30, wherein the blocking plate cools at least one of the shaping object shaped on the support surface and the shaping material supplied on the support surface.

32. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface; and
a movement device configured to move the support member with respect to the beam irradiation device,
wherein, in a duration in which the support member is moved by the movement device, the beam irradiation device deflects the energy beam.

33. The shaping device according to claim 32, wherein the beam irradiation device deflects the energy beam in a direction crossing with a movement direction in which the support member is moved by the movement device.

34. The shaping device according to claim 33, wherein the beam irradiation device has a plurality of beam irradiation units disposed along a direction crossing the movement direction of the support member.

35. The shaping device according to claim 34, wherein a range irradiated with the energy beam from a first beam irradiation unit among the plurality of beam irradiation units and a range irradiated with the energy beam from a second beam irradiation unit among the plurality of beam irradiation units partially overlap with each other.

36. The shaping device according to any one of claims 32 to 35, wherein the movement device moves the support member in a rotation direction about a rotation axis.

37. The shaping device according to claim 36, wherein the movement device is set as a first movement device, the rotation axis is set as a first axis and the rotation direction is set as a first rotation direction,
the shaping device further comprising:
a second movement device that is configured to move the support member in a second rotation direction about a second axis.

38. The shaping device according to claim 37, wherein, when the support member moves in the first rotation direction, the second axis moves around the first axis.

39. A shaping device configured to shape a shaped object on a support surface, the shaping device comprising:
a material supply device configured to supply a shaping material onto the support surface;
a beam irradiation device configured to irradiate the shaping material on the support surface with an energy beam; and
a support member configured to support a support surface member which includes the support surface;
wherein the material supply device includes a hopper part configured to supply the shaping material from a supply port and a material supply part configured to supply the shaping material to the hopper part.

40. The shaping device according to claim 39, the shaping device further comprising:
a housing member that accomodates at least a part of the beam irradiation device, the support surface member, the support member and the hopper part, and
a vacuum pump configured to vacuum suction the housing member.

41. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface;
a movement device configured to move the support member with respect to the beam irradiation device; and
a controller configured to control the material supply device based on a positional relationship between a material supply position by the material supply device and the support surface.

42. The shaping device according to claim 41, the shaping device further comprising:
a position detector configured to detect a position of the support member,
wherein the controller controls the material supply device based on a detection result of the position detector.

43. The shaping device according to claim 41 or 42, wherein the controller controls the material supply device so that the shaping material from the material supply device is supplied when the support surface is positioned at a material supply position by the material supply device.

44. A shaping device configured to shape a shaped object on a support surface, the shaping device comprising:
a plurality of material supply device configured to supply a shaping material onto the support surface;
a beam irradiation device configured to irradiate the shaping material on the support surface with an energy beam;
a support member configured to support a support surface member which includes the support surface; and
a movement device configured to move the support member with respect to the beam irradiation device;
wherein the plurality of material supply device are provided at different positions on a route where the support member is moved.

45. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member which includes the support surface; and
a movement device configured to move the support member with respect to the beam irradiation device;
wherein the material supply device is movable in a direction parallel to a plane in which the support member is moved.

46. A shaping device configured to shape a shaped object on a support surface, the shaping device comprising:
a material supply device configured to supply a shaping material onto the support surface;
a plurality of heating device configured to heat the shaping material on the support surface,
a beam irradiation device configured to irradiate the shaping material on the support surface with an energy beam;
a support member configured to support a support surface member which includes the support surface; and
a movement device configured to move the support member with respect to the beam irradiation device;
wherein the plurality of heating device are provided at different positions at above a route where the support member is moved.

47. A shaping device configured to shape a shaped object on a support surface, the shaping device comprising:
a material supply device configured to supply a shaping material onto the support surface;
a beam irradiation device configured to irradiate the shaping material on the support surface with an energy beam;
a support member configured to support a support surface member, which includes the support surface, on one surface of the support member;
a first moving device that has a movable member and that is configured to move the support member with respect to the beam irradiation device by moving the movable member; and
a second moving device configured to move the support member,
wherein movement of the support member by the second moving device includes a component parallel to the support surface.

48. The shaping device according to claim 47, wherein a direction of the movement of the support member by the first moving device includes a component parallel to the support surface.

49. The shaping device according to claim 47 or 48, wherein the first moving device moves the support member in a first rotation direction around a first axis.

50. The shaping device according to claim 49, wherein the second moving device moves the support member in a second rotation direction about a second axis.

51. The shaping device according to claim 50, wherein the second axis is separated from the first axis.

52. The shaping device according to claim 50 or 51, wherein the support member moves in the first rotation direction along a route separated from the first axis.

53. The shaping device according to claim 51 or 52, wherein the second axis moves around the first axis when the support member is moved in the first rotation direction.

54. The shaping device according to any one of claims 50 to 53, wherein the second rotation direction has an orientation different from the first rotation direction.

55. The shaping device according to claim 54, wherein a rotation angular speed of the support member along the first rotation direction is equal to a rotation angular speed of the support member in the second rotation direction.

56. The shaping device according to any one of claims 49 to 55, wherein a posture of the support surface is constant when the support member is moved in the first rotation direction.

57. The shaping device according to any one of claims 49 to 56, wherein the beam irradiation device irradiates a position separated from the first axis with the energy beam.

58. The shaping device according to any one of claims 49 to 57, wherein the material supply device supplies the shaping material to a position separated from the first axis.

59. The shaping device according to any one of claims 47 to 55, wherein an angular relation of an axis along the support surface with respect to an axis crossing an optical axis of the beam irradiation device is maintained when the support member is moved by the first moving device.

60. The shaping device according to claim 59, wherein the beam irradiation device comprises a plurality of beam irradiation optical systems, and
the crossing axis crosses an optical axis of each of the plurality of beam irradiation optical systems.

61. The shaping device according to claim 47 or 48, wherein the first moving device moves the support member along a first direction parallel to the support surface.

62. The shaping device according to claim 61, wherein the first direction is a linear direction.

63. The shaping device according to claim 61 or 62, wherein the second moving device moves the support member along a second direction parallel to the support surface.

64. The shaping device according to claim 63, wherein the second direction is a linear direction.

65. The shaping device according to claim 63 or 64, wherein the first direction and the second direction are same direction.

66. The shaping device according to claim 63 or 64, wherein the first direction and the second direction are opposite directions.

67. The shaping device according to any one of claims 47 to 66, wherein the support member includes a reference mark irradiated with the energy beam.

68. The shaping device according to claim 67, wherein a detector configured to detect a component of the energy beam via the reference mark is provided.

69. The shaping device according to claim 68, wherein a controller configured to acquire information related to an irradiation position of the energy beam by using a detection result of the component obtained by the detector is provided.

70. The shaping device according to any one of claims 47 to 69, wherein a controller configured to control at least one of the beam irradiation device and the first and second moving devices on the basis of information related to 3D data of the shaped object is provided.

71. The shaping device according to claim 70, wherein the controller controls the beam irradiation device such that the energy beam is radiated to at least a part of the shaping material above the support surface on the basis of the information related to the 3D data of the shaped object.

72. The shaping device according to any one of claims 47 to 71, wherein the material supply device supplies a powder material.

73. The shaping device according to any one of claims 47 to 72, wherein the beam irradiation device radiates a charged particle beam.

74. The shaping device according to any one of claims 47 to 73, wherein the support member includes a table device which includes a table which is movable in a vertical direction and on which the shaping material is laid, a table support member on which the table is mounted and a frame member configured to restrict a spread of a shaping material and a height of an uppermost surface of the shaping material supplied onto the table is provided, and a driving section configured to move the table on the table support member in the vertical direction.

75. The shaping device according to claim 74, wherein the material supply device includes a powder applying system configured to lay the shaping material and to form a layer of the shaping material at a working region on the table which is defined by the frame member.

76. The shaping device according to claim 74 or 75, further comprising a controller configured to control at least one of the first and second moving devices, and the beam irradiation device on the basis of the 3D data of the shaped object such that the energy beam is selectively radiated to only a necessary portion using the layer of the shaping material formed on the support surface as a target, during shaping of the shaped object.

77. The shaping device according to claim 76, wherein the beam irradiation device has an electron source and an optical system, and has at least one electron beam irradiation unit that is configured to irradiate a target with electrons emitted from the source as an electron beam and that is configured to deflect the electron beam within a predetermined angular range.

78. The shaping device according to claim 77, wherein the first and second moving devices move the support surface member in a horizontal plane along a predetermined circulation route while maintaining an orientation of the support surface member in a horizontal plane at a constant orientation.

79. The shaping device according to claim 78, wherein the circulation route is a circular circulation route about a first axis perpendicular to the horizontal plane.

80. The shaping device according to claim 79, wherein the first and second moving devices respectively includes:
a first driving system that has a first member which is rotatable about the first axis and on which the table device is mounted, and that is configured to drive the first member so as to rotate about the first axis; and
a second driving system configured to, in conjunction with the rotation of the first member, drive the table device so as to rotate at a rotation speed ratio of 1:1 in an orientation opposite with respect to the first member about a second axis, which is parallel to the first axis, on the first member.

81. The shaping device according to claim 80, wherein the first member is a turntable that rotates about the first axis.

82. The shaping device according to any one of claims 78 to 81, wherein the controller controls the beam irradiation device such that the electron beam is selectively radiated to the target on the basis of the 3D data when the first member is rotated by the first driving system at a constant rotation speed.

83. The shaping device according to any one of claims 78 to 82, wherein the powder applying system has a material supply unit configured to supply a shaping material onto the table, and a rake member that is relatively movable with respect to the frame member along an upper surface of the frame member, when the table device is located at a predetermined position on the circulation route, and
the beam irradiation device and the rake member are disposed at different positions on the circulation route.

84. The shaping device according to claim 83, further comprising a preheating unit configured to preheat the shaping material,
wherein the preheating unit is disposed at a position between the rake member and the beam irradiation device on the circulation route.

85. The shaping device according to claim 84, wherein the preheating unit is disposed adjacent to and downstream from the rake member on the circulation route.

86. The shaping device according to any one of claims 78 to 85, wherein the beam irradiation device has the plurality of electron beam irradiation units disposed along the first direction crossing the circulation route.

87. The shaping device according to claim 86, wherein the target is irradiated with the electron beam while moving substantially along a second direction perpendicular to the first direction within a horizontal plane orthogonal to the optical axis of the optical system, and
each of the plurality of electron beam irradiation units deflects the electron beam such that an irradiation region of the electron beam reciprocally moves at least in the first direction.

88. The shaping device according to claim 87, wherein each of the plurality of electron beam irradiation units is able to deflect the electron beams radiated to the target so as to overlap some of the electron beams emitted from the adjacent electron beam irradiation unit.

89. The shaping device according to any one of claims 78 to 85, wherein a reference mark is provided on the frame member,
the shaping device further comprising:
a position measurement system configured to measure positional information of the table device in at least a horizontal plane; and
a detector configured to detect a reflecting component generated from the reference mark by irradiation of the reference mark with the electron beam, and
when the table device is moved by the moving system to a position where the reference mark is able to be irradiated with the electron beam from the beam irradiation device, the controller irradiates the reference mark with the electron beam via the beam irradiation device and acquires correction information of an irradiation position of an electron beam on the basis of a detection result of the detector and a measurement result of the position measurement system upon detection by the detector.

90. The shaping device according to claim 89, wherein acquisition of the correction information is performed before irradiation of the layer of the shaping material formed on the table with the electron beam.

91. The shaping device according to claim 90, wherein acquisition of the correction information is performed whenever irradiation of a predetermined number of layers with the electron beam is performed.

92. The shaping device according to any one of claims 88 to 91, wherein a beam monitor configured to detect a beam current of an electron beam is provided on the frame member.

93. The shaping device according to claim 92, wherein the beam irradiation device has the plurality of electron beam irradiation units disposed along the first direction crossing the circulation route.

94. The shaping device according to claim 93, wherein at least one of the reference mark and the beam monitor is provided on the frame member so as to individually correspond to the plurality of electron beam irradiation units.

95. The shaping device according to claim 93 or 94, wherein the target is irradiated with the electron beam while moving substantially in a second direction perpendicular to the first direction within a horizontal plane orthogonal to the optical axis of the optical system, and
each of the plurality of electron beam irradiation units deflects the electron beam such that an irradiation region of the electron beam is reciprocally moved at least in the first direction.

96. The shaping device according to any one of claims 78 to 95, further comprising a vacuum chamber configured to partition a vacuum vessel in which the circulation route of the table device is formed.

97. The shaping device according to any one of claims 47 to 96, wherein a first support member and a second support member different from the first support member are provided as the support member,
the first support member supports a first support surface member as the support surface member and the second support section supports a second support surface member different from the first support surface member,
the material supply device supplies a shaping material onto a first support surface provided on the first support surface member and a second support surface provided on the second support surface member,
the first and second moving devices change a relative positional relation between the beam irradiation device and the first support surface and a relative positional relation between the beam irradiation device and the second support surface, respectively,
the irradiation region of the energy beam is formed on the shaping material on the first support surface in a first duration and the irradiation region of the energy beam is formed on the shaping material on the second support surface in a second duration different from the first duration, and
a first shaped object is shaped on the first support surface and a second shaped object is shaped on the second support surface.

98. The shaping device according to claim 97, wherein the shaping material is supplied to the first support surface in a third duration and the shaping material is supplied to the second support surface in a fourth duration different from the third duration.

99. The shaping device according to any one of claims 47 to 96, wherein a first support member and a second support member different from the first support member are provided as the support member,
the first support member supports a first support surface member as the support surface member and the second support section supports a second support surface member different from the first support surface member,
the material supply device supplies a shaping material onto a first support surface provided on the first support surface member and a second support surface provided on the second support surface member,
the first and second moving devices change a relative positional relation between the beam irradiation device and the first support surface and a relative positional relation between the beam irradiation device and the second support surface, respectively,
the shaping material is supplied onto the first support surface in a first duration and the shaping material is supplied onto the second support surface in a second duration different from the first duration, and
a first shaped object is shaped on the first support surface and a second shaped object is shaped on the second support surface.

100. The shaping device according to any one of claims 97 to 99, wherein the positional relation between the beam irradiation device and the first support surface is changed in an in-plane direction crossing the irradiation direction of the energy beam, and
the positional relation between the beam irradiation device and the second support surface is changed in the in-plane direction crossing the irradiation direction.

101. The shaping device according to any one of claims 97 to 100, wherein the positional relation between the beam irradiation device and the first support surface is changed in the irradiation direction of the energy beam, and
the positional relation between the beam irradiation device and the second support surface is changed in the irradiation direction.

102. The shaping device according to claim 101, wherein the first support surface and the second support surface are moved along the irradiation direction.

103. The shaping device according to claim 102, wherein the first support surface is moved along the irradiation direction independently from the second support surface.

104. The shaping device according to any one of claims 97 to 103, wherein the material supply device forms a first layer of the shaping material on the first support surface and forms a second layer of the shaping material separated from the first layer on the second support surface.

105. The shaping device according to any one of claims 97 to 104, wherein the first support surface and the second support surface are separated from each other.

106. The shaping device according to any one of claims 97 to 105, wherein the material supply device supplies the shaping material from a supply port that is able to face the first support surface or the second support surface.

107. The shaping device according to any one of claims 97 to 106, wherein the material supply device supplies the shaping material from a supply port that is able to face the beam irradiation device.

108. The shaping device according to claim 106 or 107, wherein the material supply device includes a rake member configured to lay the shaping material from the supply port onto the first support surface or the second support surface and to form a layer of the shaping material on the first support surface or the second support surface.

109. The shaping device according to any one of claims 97 to 108, wherein the material supply device includes a first material supply device configured to supply the shaping material from a first supply port and a second material supply device configured to supply the shaping material from a second supply port at a position different from the first supply port.

110. The shaping device according to any one of claims 97 to 109, wherein the beam irradiation device includes a first beam irradiation device configured to emit the energy beam from a first emitting port and a second beam irradiation device configured to emit the energy beam from a second emitting port different from the first emitting port.

111. The shaping device according to claim 110, wherein the first and second emitting ports are disposed at different positions within a plane crossing the irradiation direction in which the energy beams from the first and second beam irradiation devices are radiated.

112. The shaping device according to claim 111, wherein the first and second emitting ports are disposed in a direction crossing the direction in which the relative positional relation between the beam irradiation device and the first or second support surface is changed.

113. The shaping device according to claim 111 or 112, wherein the first and second emitting ports are disposed along the direction in which the relative positional relation between the beam irradiation device and the first or second support surface is changed.

114. The shaping device according to any one of claims 97 to 113, wherein the material supply device is moved with respect to the first or second support surface.

115. The shaping device according to any one of claims 97 to 114, wherein the beam irradiation device is moved with respect to the first or second support surface.

116. The shaping device according to any one of claims 97 to 115, wherein the first and second support members are movable with respect to the beam irradiation device.

117. The shaping device according to claim 116, wherein the first moving devices includes a movable member that is connected to the first support member and that is movable along a moving direction, and
the second moving devices includes a movable member that is connected to the second support member and that is movable along a moving direction.

118. The shaping device according to claim 117, wherein the first and second moving devices include driving sections configured to drive the movable members, respectively.

119. The shaping device according to claim 117 or 118, wherein the first and second support members are movable with respect to the movable members.

120. The shaping device according to any one of claims 97 to 119, wherein the first support member and the second support member are moved around a first axis.

121. The shaping device according to claim 120, wherein the first support member is rotated about a second axis parallel to the first axis, and
the second support member is rotated about a third axis parallel to the first axis.

122. The shaping device according to claim 121, wherein postures of the first support member and the second support member are maintained when the first support member and the second support member are moved around the first axis.

123. The shaping device according to any one of claims 97 to 122, wherein the first and second moving devices move the first support member and the second support member along a circulation route.

124. The shaping device according to any one of claims 97 to 123, wherein at least one of the first support member and the second support member includes a reference mark irradiated with the energy beam.

125. The shaping device according to claim 124, wherein a detector configured to detect a component of the energy beam via the reference mark is provided.

126. The shaping device according to claim 125, wherein a controller configured to acquire information related to an irradiation position of the energy beam by using a detection result of the component by the detector is provided.

127. The shaping device according to any one of claims 97 to 126, wherein at least one of the first support member and the second support member includes a beam detector configured to detect properties of the energy beam.

128. The shaping device according to any one of claims 97 to 127, wherein a controller configured to control at least one of the beam irradiation device and the first and second moving devices on the basis of the information related to the 3D data of the shaped object is provided.

129. The shaping device according to claim 128, wherein the controller controls the beam irradiation device such that the energy beam is radiated to at least a part of the shaping material above the first support surface and controls the beam irradiation device such that the energy beam is radiated to at least a part of the shaping material above the second support surface, on the basis of the information related to the 3D data of the shaped object.

130. The shaping device according to any one of claims 97 to 129, wherein the material supply device supplies a powder material.

131. The shaping device according to any one of claims 97 to 130, wherein the beam irradiation device radiates a charged particle beam.

132. The shaping device according to any one of claims 47 to 131, wherein the support member includes a plurality of table devices each having a table which is movable in a vertical direction and on which the shaping material is laid, a table support member on which the table is mounted and a frame member configured to restrict a spread of the shaping material and a height of an uppermost surface of the shaping material supplied onto the table is provided, and a driving section configured to move the table on the table support member in the vertical direction,
a controller configured to control the driving section, the first and second moving devices, the material supply device, and the beam irradiation device is further provided,
the first and second moving devices move each of the plurality of table devices within a horizontal plane along a predetermined circulation route,
the beam irradiation device has an electron source and an optical system, and has at least one electron beam irradiation unit that is configured to radiate electrons discharged from the source to a target as the electron beam and that is configured to deflect the electron beam within a predetermined angular range,
the material supply device is disposed at a position on the circulation route different from the beam irradiation device, and, on each of the plurality of table devices, a layer of the shaping material is formed by laying the shaping material in a working region on the table defined by the frame member , and
the controller controls the first and second moving devices and the beam irradiation device on the basis of the 3D data of the shaped object such that the electron beam is selectively radiated to only a necessary portion using the shaping material laid on the table of the first table device among the plurality of table devices as the target, and simultaneously controls the material supply device when the second table device is moved within a horizontal plane such that the shaping material is laid on a table of a second table device different from the first table device among the plurality of table devices.

133. The shaping device according to claim 132, further comprising a preheating unit disposed adjacent to and downstream from the material supply device on the circulation route and configured to preheat the shaping material.

134. The shaping device according to claim 133, wherein the controller preheats the shaping material laid on the table of the second table device using the preheating unit.

135. The shaping device according to claim 134, wherein the preheating of the shaping material is performed in parallel with the selective irradiation of the electron beam with respect to the target which is performed on the table of the first table device.

136. The shaping device according to any one of claims 133 to 135, wherein the first moving device moves each of the plurality of table devices along the circulation route, and
the second moving device drives the plurality of table devices in conjunction with a change in position within a horizontal plane of the plurality of table devices moved by the first moving device such that an orientation within a horizontal plane of the table of each the plurality of table devices is maintained.

137. The shaping device according to claim 136, wherein the first moving device includes a first member that is rotatable about a first axis perpendicular to the horizontal plane and the plurality of table devices are mounted on the first member, and
the second moving device drives each of the plurality of tables devices so as to rotate at a rotation speed ratio of 1:1 in an orientation opposite to the first member about a second axis perpendicular to the horizontal plane in conjunction with the rotation of the first member.

138. The shaping device according to claim 137, wherein the first member is a turntable that rotates about the first axis.

139. The shaping device according to any one of claims 133 to 138, wherein the material supply device is constituted by a powder applying system, and
the powder applying system has a material supply unit configured to supply a shaping material onto the table and a rake member that is relatively movable with respect to the frame member along the upper surface of the frame member, when any one of the plurality of table devices is located at a predetermined position on the circulation route.

140. The shaping device according to any one of claims 133 to 139, wherein the beam irradiation device has a plurality of electron beam irradiation units disposed in a first direction crossing the circulation route.

141. The shaping device according to claim 140, wherein the target is irradiated with the electron beam while moving substantially along a second direction perpendicular to the first direction within a horizontal plane orthogonal to the optical axis of the optical system, and
each of the plurality of electron beam irradiation units deflects the electron beam such that an irradiation region of the electron beam is reciprocally moved at least in the first direction.

142. The shaping device according to claim 141, wherein each of the plurality of electron beam irradiation units enables deflection of the electron beam radiated to the target so that the deflected electron beam overlaps some of the electron beams emitted from the adjacent electron beam irradiation unit.

143. The shaping device according to any one of claims 133 to 138, wherein a reference mark is provided on each of a frame member of the plurality of table devices,
the shaping device further comprising:
a position measurement system configured to measure positional information of each of the plurality of table devices within at least a horizontal plane; and
a detector configured to detect a reflecting component generated from the reference mark through irradiation of the electron beam to the reference mark, and
the controller irradiates the reference mark with the electron beam via the beam irradiation device when one of the plurality of table devices is moved by a moving system to a position where the electron beam is able to be radiated to the reference mark from the beam irradiation device, and acquires correction information of irradiation position of electron beam on the basis of a detection result of the detector and a measurement result of the positional information of the one table device by the position measurement system upon the detection by the detector.

144. The shaping device according to claim 143, wherein acquisition of the correction information is performed whenever irradiation of a predetermined number of layers with the electron beam is performed for each of the plurality of table devices.

145. The shaping device according to claim 143 or 144, wherein a beam monitor configured to detect a beam current of an electron beam is provided on the frame member of each of the plurality of table devices.

146. The shaping device according to claim 145, wherein the beam irradiation device has the plurality of electron beam irradiation units disposed along a first direction crossing the circulation route.

147. The shaping device according to claim 145, wherein at least one of the reference mark and the beam monitor is provided on the frame member of each of the plurality of table devices to individually correspond to each of the plurality of electron beam irradiation units.

148. The shaping device according to claim 146 or 147, wherein the target is irradiated with the electron beam while moving substantially along a second direction perpendicular to the first direction in a horizontal plane orthogonal to the optical axis of the optical system, and
each of the plurality of electron beam irradiation units deflects the electron beam such that the irradiation region of the electron beam is reciprocally moved at least in the first direction.

149. The shaping device according to any one of claims 133 to 148, wherein the plurality of table devices sequentially face the beam irradiation device.

150. The shaping device according to claim 133, wherein a plurality of sets of the beam irradiation devices and the material supply devices are provided,
each set of the beam irradiation device and the material supply device is sequentially disposed on the circulation route, and
during movement of one cycle of the plurality of table devices along the circulation route, in each of the sets, laying of the shaping material onto the table and irradiation of the electron beam to the laid shaping material are sequentially performed by the controller.

151. The shaping device according to claim 150, wherein a preheating unit configured to preheat the shaping material is disposed between the beam irradiation device and the material supply device on the circulation route is disposed for each of the sets.

152. The shaping device according to claim 151, wherein a set of the beam irradiation device, the material supply device and the preheating unit are provided as same number as a number of the table device.

153. The shaping device according to any one of claims 133 to 152, further comprising a vacuum chamber configured to partition a vacuum vessel in which the circulation route of the plurality of table devices is formed.
